# EUROPEAN PATENT APPLICATION

(11) **EP 3 021 574 A1**
(43) Date of publication of application: **18.05.2016**
(21) Application number: 14822129.4
(22) Date of filing: 11.07.2014
(51) Int. Cl.: H04N 7/08, H04J 11/00

(54) **METHOD FOR TRANSMITTING BROADCASTING SIGNAL, METHOD FOR RECEIVING BROADCASTING SIGNAL, APPARATUS FOR TRANSMITTING BROADCASTING SIGNAL, AND APPARATUS FOR RECEIVING BROADCASTING SIGNAL**

(30) Priority: 11.07.2013 US 201361844883 P
(71) Applicant: LG Electronics Inc., Yeongdeungpo-gu, Seoul 07336 (KR)
(72) Inventor: HWANG, Jaeho, Seoul 137-893 (KR); HONG, Sungryong, Seoul 137-893 (KR); KO, Woosuk, Seoul 137-893 (KR)
(74) Representative: Cabinet Plasseraud
(86) International application number: PCT/KR2014/006242
(87) International publication number: WO 2015/005715

(57) **Abstract**

The present invention provides a method for transmitting a broadcasting signal. The method for transmitting the broadcasting signal according to the present invention may comprise: an input formatting step of processing one or more input streams and outputting the processed input streams to one or more data pipes; a step of encoding service data of the data pipes; a step of encoding signaling data, the signaling data including information for signaling one or more pieces of service data transmitted through the data pipes; a step of mapping the encoded service data and the encoded signaling data to generate one or more signal frames; a step of modulating the one or more generated signal frames through an orthogonal frequency division multiplexing (OFDM) scheme; and transmitting a broadcasting signal including the one or more modulated signal frames.

## Description

### [Technical Field]

The present invention relates to a method for transmitting a broadcast signal, a method for receiving a broadcast signal, an apparatus for transmitting a broadcast signal and an apparatus for receiving a broadcast signal.

### [Background Art]

As analog broadcast signal transmission comes to an end, various technologies for transmitting/receiving digital broadcast signals are being developed. A digital broadcast signal may include a larger amount of video/audio data than an analog broadcast signal and further include various types of additional data in addition to the video/audio data.

That is, a digital broadcast system can provide HD (high definition) images, multichannel audio and various additional services. However, data transmission efficiency for transmission of large amounts of data, robustness of transmission/reception networks and network flexibility in consideration of mobile reception equipment need to be improved for digital broadcast.

### [Disclosure]

### [Technical Problem]

Accordingly, the present invention is directed to an apparatus for transmitting broadcast signals and an apparatus for receiving broadcast signals for future broadcast services and methods for transmitting and receiving broadcast signals for future broadcast services.

### [Technical Solution]

To accomplish the object, the present invention provides a method for transmitting broadcast signals. The method for transmitting broadcast signals according to the present invention includes: processing one or more input streams and outputting the processed input streams as one or more data pipes, the data pipes carrying one or more services or service components, the input streams including at least one IP packet, the at least one IP packet including an IP packet header and an IP packet payload, IP packet header compression being performed when the at least one IP packet is a fragmented IP packet on the basis of information included in the IP packet header; encoding service data of the data pipes; encoding signaling data, the signaling data including information signaling the one or more pieces of service data transmitted through the data pipes; mapping the encoded service data and the encoded signaling data to generate one or more signal frames; modulating the generated one or more signal frames according to orthogonal frequency division multiplexing (OFDM); and transmitting a broadcast signal including the modulated one or more signal frames.

The performing of IP packet compression may include: extracting two or more fragmented IP packets; and generating a merged IP packet payload by merging IP packet payloads included in the extracted fragmented IP packets and generating a merged IP packet including the generated merged IP packet payload, wherein the merged IP packet further includes a merged IP packet header generated on the basis of IP packet headers respectively included in the extracted fragmented IP packets.

Each of the IP packet headers may include at least one of an Internet protocol (IP) header, a user datagram protocol (UDP) header, a real time protocol (RTP) header.

The size of the merged IP packet payload may be greater than the size of the payload of each of the extracted fragmented IP packets, and the size of each of the extracted fragmented IP packets may be equal to or less than a maximum transmission unit (MTU) of IP packets.

The signaling data may include information about the at least one IP packet included in the signaling data.

The signaling data may include information indicating whether the performing of IP packet header compression is included.

To accomplish the object, the present invention provides a method for receiving broadcast signals. The method for receiving broadcast signals according to the present invention includes: receiving one or more broadcast signals; demodulating the received one or more broadcast signals according to OFDM; decoding signaling data included in signal frames, the signaling data including information signaling service data included in the signal frames transmitted through data pipes; obtaining one or more signal frames from the demodulated one or more broadcast signals, the data pipes carrying one or more services or service components; decoding the service data of the data pipes; and outputting the decoded service data, wherein, when the service data includes a merged IP packet, the method comprises splitting the merged IP packet, the merged IP packet including a merged IP packet header and a merged IP packet payload, the merged IP packet payload including payloads of two or more IP packets.

The splitting of the merged IP packet may include splitting the merged IP packet into two or more IP packets on the basis of information included in the merged IP packet header and information included in the signaling data, wherein the two or more IP packets respectively include IP packet headers and IP packet payloads, wherein the IP packet headers are generated on the basis of information included in the merged IP packet header and information on the payloads of the split IP packets.

The merged IP packet may include at least one of an IP header, a UDP header and an RTP header.

The size of each of the split two or more IP packets may be equal to or less than an MTU of IP packets.

The signaling data may include information about one or more IP packets included in the service data.

The signaling data may include information indicating whether the service data includes the merged IP packet.

To accomplish the object, the present invention provides an apparatus for transmitting broadcast signals. The apparatus for transmitting broadcast signals according to the present invention includes: an input formatter for processing one or more input streams and outputting the processed input streams as one or more data pipes, the data pipes carrying one or more services or service components, the input streams including at least one IP packet, the at least one IP packet including an IP packet header and an IP packet payload, the input formatter performing IP packet header compression when the at least one IP packet is a fragmented IP packet on the basis of information included in the IP packet header; an encoder for encoding service data of the data pipes; an encoder for encoding signaling data, the signaling data including information signaling the one or more pieces of service data transmitted through the data pipes; a frame builder for mapping the encoded service data and the encoded signaling data to generate one or more signal frames; a modulator for modulating the generated one or more signal frames according to orthogonal frequency division multiplexing (OFDM); and a transmitter for transmitting a broadcast signal including the modulated one or more signal frames.

IP packet compression may be performed by extracting two or more fragmented IP packets, generating a merged IP packet payload by merging IP packet payloads included in the extracted fragmented IP packets and generating a merged IP packet including the generated merged IP packet payload, wherein the merged IP packet further includes a merged IP packet header generated on the basis of IP packet headers respectively included in the extracted fragmented IP packets.

Each of the IP packet headers may include at least one of an IP header, a UDP header, and an RTP header.

The size of the merged IP packet payload may be greater than the size of the payload of each of the extracted fragmented IP packets, and the size of each of the extracted fragmented IP packets may be equal to or less than an MTU of IP packets.

The signaling data may include information about the at least one IP packet included in the signaling data.

The signaling data may include information indicating whether IP packet header compression is performed.

To accomplish the object, the present invention provides an apparatus for receiving broadcast signals. The apparatus for receiving broadcast signals according to the present invention includes: a receiver for receiving one or more broadcast signals; a demodulator for demodulating the received one or more broadcast signals according to OFDM; a decoder for decoding signaling data included in signal frames, the signaling data including information signaling service data included in the signal frames transmitted through data pipes; a frame parser for obtaining one or more signal frames from the demodulated one or more broadcast signals, the data pipes carrying one or more services or service components; a decoder for decoding the service data of the data pipes; and an output unit for outputting the decoded service data, wherein, when the service data includes a merged IP packet, the merged IP packet is split into IP packets, the merged IP packet including a merged IP packet header and a merged IP packet payload, the merged IP packet payload including payloads of two or more IP packets.

The merged IP packet may be split into two or more IP packets on the basis of information included in the merged IP packet header and information included in the signaling data, wherein the two or more IP packets respectively include IP packet headers and IP packet payloads, wherein the IP packet headers are generated on the basis of information included in the merged IP packet header and information on the payloads of the split IP packets.

The merged IP packet may include at least one of an IP header, a UDP header and an RTP header.

The size of each of the split two or more IP packets may be equal to or less than an MTU of IP packets.

The signaling data may include information about one or more IP packets included in the service data.

The signaling data may include information indicating whether the service data includes the merged IP packet.

### [Advantageous Effects]

The present invention provides efficient broadcast signal transmission method, broadcast signal reception method, broadcast signal transmission apparatus and broadcast signal reception apparatus.

In addition, the present invention can improve data transmission efficiency and increase robustness of broadcast signal transmission and reception.

### [Description of Drawings]

FIG. 1 illustrates a structure of an apparatus for transmitting broadcast signals for future broadcast services according to an embodiment of the present invention.
FIG. 2 illustrates an input formatting module according to an embodiment of the present invention.
FIG. 3 illustrates an input formatting module according to another embodiment of the present invention.
FIG. 4 illustrates an input formatting module according to another embodiment of the present invention.
FIG. 5 illustrates a coding & modulation module according to an embodiment of the present invention.
FIG. 6 illustrates a frame structure module according to an embodiment of the present invention.
FIG. 7 illustrates a waveform generation module according to an embodiment of the present invention.
FIG. 8 illustrates a structure of an apparatus for receiving broadcast signals for future broadcast services according to an embodiment of the present invention.
FIG. 9 illustrates a synchronization & demodulation module according to an embodiment of the present invention.
FIG. 10 illustrates a frame parsing module according to an embodiment of the present invention.
FIG. 11 illustrates a demapping & decoding module according to an embodiment of the present invention.
FIG. 12 illustrates an output processor according to an embodiment of the present invention.
FIG. 13 illustrates an output processor according to another embodiment of the present invention.
FIG. 14 illustrates a coding & modulation module according to another embodiment of the present invention.
FIG. 15 illustrates a demapping & decoding module according to another embodiment of the present invention.
FIG. 16 illustrates a mode adaptation module of an apparatus for transmitting broadcast signals according to another embodiment of the present invention.
FIG. 17 illustrates an example of splitting an IP packet when the IP packet is transmitted over Ethernet.
FIG. 18 illustrates IP packets (a) and (b) input to an input formatting module according to another embodiment of the present invention and an IP packet (c) output by performing an IP repacking method by the input formatting module.
FIG. 19 is a flowchart illustrating an IP repacking method according to another embodiment of the present invention.
FIG. 20 is a table showing comparison of overhead sizes of packet headers according to data length when an MTU of IPv4 and IPv6 packets to which header compression is not applied is 1500, 8000 and 16000.
FIG. 21 is a graph showing the table of FIG. 20.
FIG. 22 is a table showing comparison of overhead sizes of packet headers according to data length when an MTU of IPv4 and IPv6 packets to which header compression is applied is 1500, 8000 and 16000.
FIG. 23 is a graph showing the table of FIG. 22.
FIG. 24 illustrates an output processor module 8300 of an apparatus for receiving broadcast signals according to another embodiment of the present invention.
FIG. 25 is a flowchart illustrating a method for transmitting broadcast signals according to an embodiment of the present invention.
FIG. 26 is a flowchart illustrating a method for receiving broadcast signals according to an embodiment of the present invention.

### [Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. The following detailed description includes specific details in order to provide a thorough understanding of the present invention. However, it will be apparent to those skilled in the art that the present invention may be practiced without such specific details.

The present invention provides apparatuses and methods for transmitting and receiving broadcast signals for future broadcast services. Future broadcast services according to an embodiment of the present invention include a terrestrial broadcast service, a mobile broadcast service, an ultra high definition television (UHDTV) service, etc. Apparatuses and methods for transmitting and receiving broadcast signals according to an embodiment of the present invention can be categorized into a base profile for the terrestrial broadcast service, a handheld profile for the mobile broadcast service and an advanced profile for the UHDTV service according to service characteristics. In this case, the base profile may refer to a profile for both the terrestrial broadcast service and the mobile broadcast service, which can be changed by a designer. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

While MISO or MIMO uses two antennas in the following for convenience of description, the present invention is applicable to systems using two or more antennas.

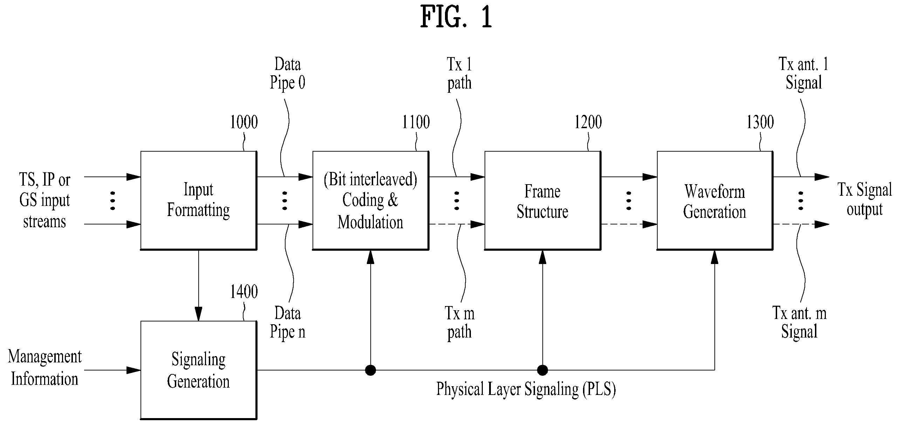

FIG. 1 illustrates a structure of an apparatus for transmitting broadcast signals for future broadcast services according to an embodiment of the present invention.

The apparatus for transmitting broadcast signals for future broadcast services according to an embodiment of the present invention can include an input formatting module 1000, a coding & modulation module 1100, a frame structure module 1200, a waveform generation module 1300 and a signaling generation module 1400. A description will be given of the operation of each module of the apparatus for transmitting broadcast signals.

Referring to FIG. 1, the apparatus for transmitting broadcast signals for future broadcast services according to an embodiment of the present invention can receive MPEG-TSs, IP streams (v4/v6) and generic streams (GSs) as an input signal. In addition, the apparatus for transmitting broadcast signals can receive management information about the configuration of each stream constituting the input signal and generate a final physical layer signal with reference to the received management information.

The input formatting module 1000 according to an embodiment of the present invention can classify the input streams on the basis of a standard for coding and modulation or services or service components and output the input streams as a plurality of logical data pipes (or data pipes or DP data). The data pipe is a logical channel in the physical layer that carries service data or related metadata, which may carry one or multiple service(s) or service component(s). In addition, data transmitted through each data pipe may be called DP data.

In addition, the input formatting module 1000 according to an embodiment of the present invention can divide each data pipe into blocks necessary to perform coding and modulation and carry out processes necessary to increase transmission efficiency or to perform scheduling. Details of operations of the input formatting module 1000 will be described later.

The coding & modulation module 1100 according to an embodiment of the present invention can perform forward error correction (FEC) encoding on each data pipe received from the input formatting module 1000 such that an apparatus for receiving broadcast signals can correct an error that may be generated on a transmission channel. In addition, the coding & modulation module 1100 according to an embodiment of the present invention can convert FEC output bit data to symbol data and interleave the symbol data to correct burst error caused by a channel. As shown in FIG. 1, the coding & modulation module 1100 according to an embodiment of the present invention can divide the processed data such that the divided data can be output through data paths for respective antenna outputs in order to transmit the data through two or more Tx antennas.

The frame structure module 1200 according to an embodiment of the present invention can map the data output from the coding & modulation module 1100 to signal frames. The frame structure module 1200 according to an embodiment of the present invention can perform mapping using scheduling information output from the input formatting module 1000 and interleave data in the signal frames in order to obtain additional diversity gain.

The waveform generation module 1300 according to an embodiment of the present invention can convert the signal frames output from the frame structure module 1200 into a signal for transmission. In this case, the waveform generation module 1300 according to an embodiment of the present invention can insert a preamble signal (or preamble) into the signal for detection of the transmission apparatus and insert a reference signal for estimating a transmission channel to compensate for distortion into the signal. In addition, the waveform generation module 1300 according to an embodiment of the present invention can provide a guard interval and insert a specific sequence into the same in order to offset the influence of channel delay spread due to multi-path reception. Additionally, the waveform generation module 1300 according to an embodiment of the present invention can perform a procedure necessary for efficient transmission in consideration of signal characteristics such as a peak-to-average power ratio of the output signal.

The signaling generation module 1400 according to an embodiment of the present invention generates final physical layer signaling information using the input management information and information generated by the input formatting module 1000, coding & modulation module 1100 and frame structure module 1200. Accordingly, a reception apparatus according to an embodiment of the present invention can decode a received signal by decoding the signaling information.

As described above, the apparatus for transmitting broadcast signals for future broadcast services according to one embodiment of the present invention can provide terrestrial broadcast service, mobile broadcast service, UHDTV service, etc. Accordingly, the apparatus for transmitting broadcast signals for future broadcast services according to one embodiment of the present invention can multiplex signals for different services in the time domain and transmit the same.

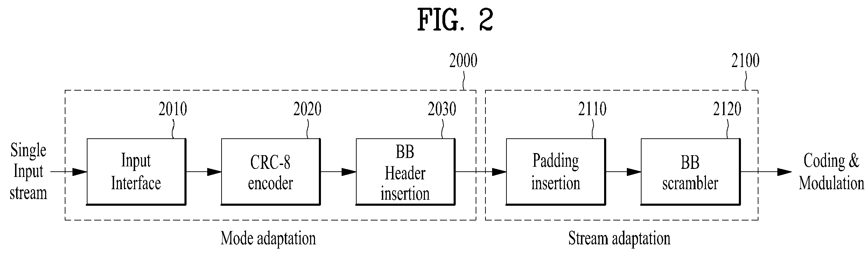

FIGS. 2, 3 and 4 illustrate the input formatting module 1000 according to embodiments of the present invention. A description will be given of each figure.

FIG. 2 illustrates an input formatting module according to one embodiment of the present invention. FIG. 2 shows an input formatting module when the input signal is a single input stream.

Referring to FIG. 2, the input formatting module according to one embodiment of the present invention can include a mode adaptation module 2000 and a stream adaptation module 2100.

As shown in FIG. 2, the mode adaptation module 2000 can include an input interface block 2010, a CRC-8 encoder block 2020 and a BB header insertion block 2030. Description will be given of each block of the mode adaptation module 2000.

The input interface block 2010 can divide the single input stream input thereto into data pieces each having the length of a baseband (BB) frame used for FEC (BCH/LDPC) which will be performed later and output the data pieces.

The CRC-8 encoder block 2020 can perform CRC encoding on BB frame data to add redundancy data thereto.

The BB header insertion block 2030 can insert, into the BB frame data, a header including information such as mode adaptation type (TS/GS/IP), a user packet length, a data field length, user packet sync byte, start address of user packet sync byte in data field, a high efficiency mode indicator, an input stream synchronization field, etc.

As shown in FIG. 2, the stream adaptation module 2100 can include a padding insertion block 2110 and a BB scrambler block 2120. Description will be given of each block of the stream adaptation module 2100.

If data received from the mode adaptation module 2000 has a length shorter than input data length necessary for FEC encoding, the padding insertion block 2110 can insert a padding bit into the data such that the data has the input data length and output the data including the padding bit.

The BB scrambler block 2120 can randomize the input bit stream by performing an XOR operation on the input bit stream and a pseudo random binary sequence (PRBS).

The above-described blocks may be omitted or replaced by blocks having similar or identical functions.

As shown in FIG. 2, the input formatting module can finally output data pipes to the coding & modulation module.

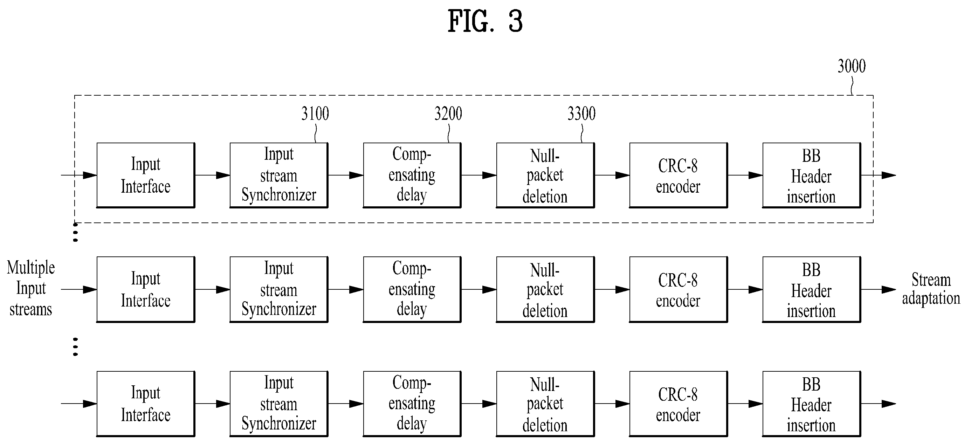

FIG. 3 illustrates an input formatting module according to another embodiment of the present invention. FIG. 3 shows a mode adaptation module 3000 of the input formatting module when the input signal corresponds to multiple input streams.

The mode adaptation module 3000 of the input formatting module for processing the multiple input streams can independently process the multiple input streams.

Referring to FIG. 3, the mode adaptation module 3000 for respectively processing the multiple input streams can include input interface blocks, input stream synchronizer blocks 3100, compensating delay blocks 3200, null packet deletion blocks 3300, CRC-8 encoder blocks and BB header insertion blocks. Description will be given of each block of the mode adaptation module 3000.

Operations of the input interface block, CRC-8 encoder block and BB header insertion block correspond to those of the input interface block, CRC-8 encoder block and BB header insertion block described with reference to FIG. 2 and thus description thereof is omitted.

The input stream synchronizer block 3100 can transmit input stream clock reference (ISCR) information to generate timing information necessary for the apparatus for receiving broadcast signals to restore the TSs or GSs.

The compensating delay block 3200 can delay input data and output the delayed input data such that the apparatus for receiving broadcast signals can synchronize the input data if a delay is generated between data pipes according to processing of data including the timing information by the transmission apparatus.

The null packet deletion block 3300 can delete unnecessarily transmitted input null packets from the input data, insert the number of deleted null packets into the input data based on positions in which the null packets are deleted and transmit the input data.

The above-described blocks may be omitted or replaced by blocks having similar or identical functions.

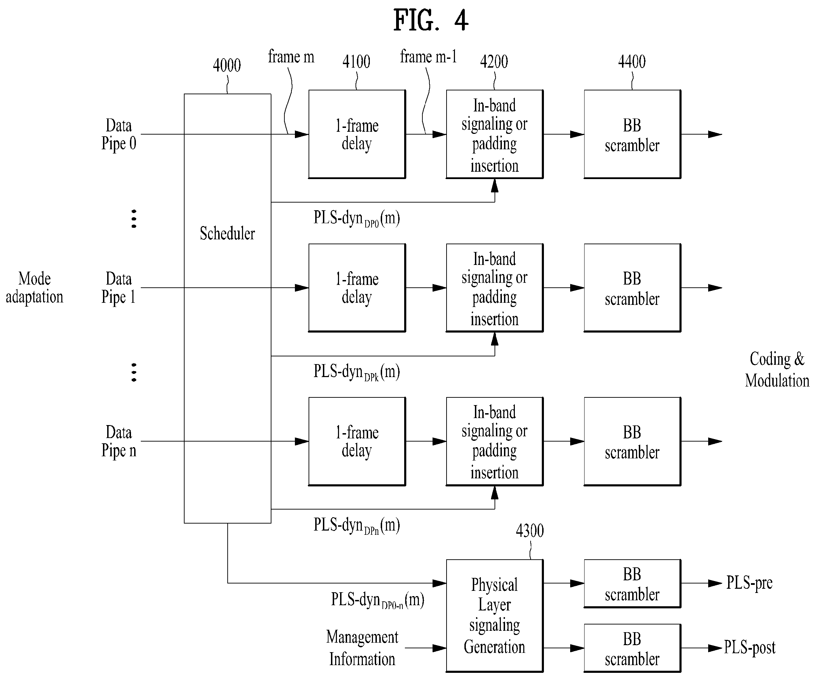

FIG. 4 illustrates an input formatting module according to another embodiment of the present invention.

Specifically, FIG. 4 illustrates a stream adaptation module of the input formatting module when the input signal corresponds to multiple input streams.

The stream adaptation module of the input formatting module when the input signal corresponds to multiple input streams can include a scheduler 4000, a 1-frame delay block 4100, an in-band signaling or padding insertion block 4200, a physical layer signaling generation block 4300 and a BB scrambler block 4400. Description will be given of each block of the stream adaptation module.

The scheduler 4000 can perform scheduling for a MIMO system using multiple antennas having dual polarity. In addition, the scheduler 4000 can generate parameters for use in signal processing blocks for antenna paths, such as a bit-to-cell demux block, a cell interleaver block, a time interleaver block, etc. included in the coding & modulation module illustrated in FIG. 1.

The 1-frame delay block 4100 can delay the input data by one transmission frame such that scheduling information about the next frame can be transmitted through the current frame for in-band signaling information to be inserted into the data pipes.

The in-band signaling or padding insertion block 4200 can insert undelayed physical layer signaling (PLS)-dynamic signaling information into the data delayed by one transmission frame. In this case, the in-band signaling or padding insertion block 4200 can insert a padding bit when a space for padding is present or insert in-band signaling information into the padding space. In addition, the scheduler 4000 can output physical layer signaling-dynamic signaling information about the current frame separately from in-band signaling information. Accordingly, a cell mapper, which will be described later, can map input cells according to scheduling information output from the scheduler 4000.

The physical layer signaling generation block 4300 can generate physical layer signaling data which will be transmitted through a preamble symbol of a transmission frame or spread and transmitted through a data symbol other than the in-band signaling information. In this case, the physical layer signaling data according to an embodiment of the present invention can be referred to as signaling information. Furthermore, the physical layer signaling data according to an embodiment of the present invention can be divided into PLS-pre information and PLS-post information. The PLS-pre information can include parameters necessary to encode the PLS-post information and static PLS signaling data and the PLS-post information can include parameters necessary to encode the data pipes. The parameters necessary to encode the data pipes can be classified into static PLS signaling data and dynamic PLS signaling data. The static PLS signaling data is a parameter commonly applicable to all frames included in a super-frame and can be changed on a super-frame basis. The dynamic PLS signaling data is a parameter differently applicable to respective frames included in a superframe and can be changed on a frame-by-frame basis. Accordingly, the reception apparatus can acquire the PLS-post information by decoding the PLS-pre information and decode desired data pipes by decoding the PLS-post information.

The BB scrambler block 4400 can generate a pseudo-random binary sequence (PRBS) and perform an XOR operation on the PRBS and the input bit streams to decrease the peak-to-average power ratio (PAPR) of the output signal of the waveform generation block. As shown in FIG. 4, scrambling of the BB scrambler block 4400 is applicable to both data pipes and physical layer signaling information.

The above-described blocks may be omitted or replaced by blocks having similar or identical functions according to designer.

As shown in FIG. 4, the stream adaptation module can finally output the data pipes to the coding & modulation module.

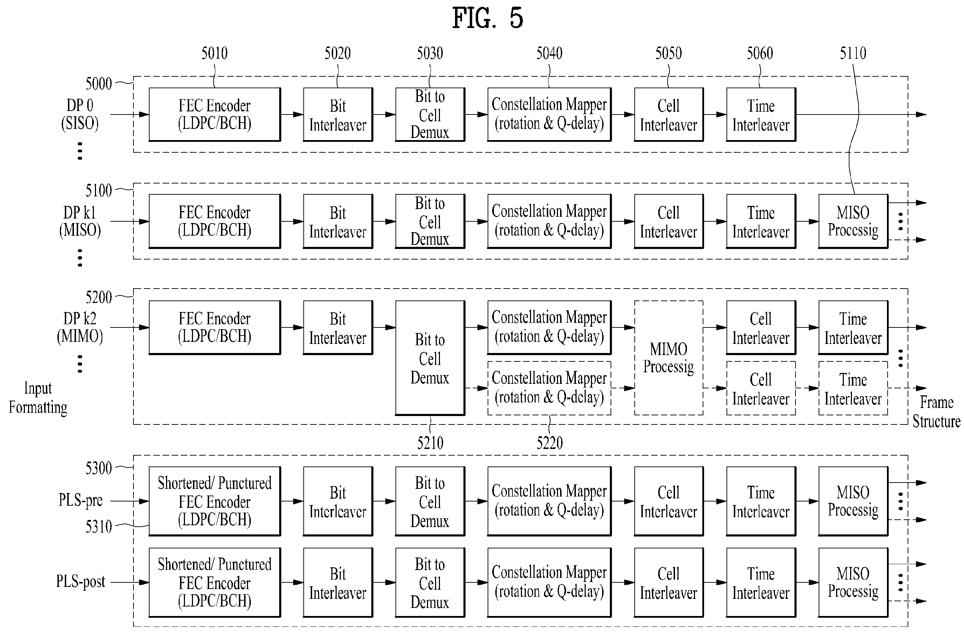

FIG. 5 illustrates a coding & modulation module according to an embodiment of the present invention.

The coding & modulation module shown in FIG. 5 corresponds to an embodiment of the coding & modulation module illustrated in FIG. 1.

As described above, the apparatus for transmitting broadcast signals for future broadcast services according to an embodiment of the present invention can provide a terrestrial broadcast service, mobile broadcast service, UHDTV service, etc.

Since QoS (quality of service) depends on characteristics of a service provided by the apparatus for transmitting broadcast signals for future broadcast services according to an embodiment of the present invention, data corresponding to respective services needs to be processed through different schemes. Accordingly, the coding & modulation module according to an embodiment of the present invention can independently process data pipes input thereto by independently applying SISO, MISO and MIMO schemes to the data pipes respectively corresponding to data paths. Consequently, the apparatus for transmitting broadcast signals for future broadcast services according to an embodiment of the present invention can control QoS for each service or service component transmitted through each data pipe.

Accordingly, the coding & modulation module according to an embodiment of the present invention can include a first block 5000 for SISO, a second block 5100 for MISO, a third block 5200 for MIMO and a fourth block 5300 for processing the PLSpre/PLS-post information. The coding & modulation module illustrated in FIG. 5 is an exemplary and may include only the first block 5000 and the fourth block 5300, the second block 5100 and the fourth block 5300 or the third block 5200 and the fourth block 5300 according to design. That is, the coding & modulation module can include blocks for processing data pipes equally or differently according to design.

A description will be given of each block of the coding & modulation module.

The first block 5000 processes an input data pipe according to SISO and can include an FEC encoder block 5010, a bit interleaver block 5020, a bit-to-cell demux block 5030, a constellation mapper block 5040, a cell interleaver block 5050 and a time interleaver block 5060.

The FEC encoder block 5010 can perform BCH encoding and LDPC encoding on the input data pipe to add redundancy thereto such that the reception apparatus can correct an error generated on a transmission channel.

The bit interleaver block 5020 can interleave bit streams of the FEC-encoded data pipe according to an interleaving rule such that the bit streams have robustness against burst error that may be generated on the transmission channel. Accordingly, when deep fading or erasure is applied to QAM symbols, errors can be prevented from being generated in consecutive bits from among all codeword bits since interleaved bits are mapped to the QAM symbols.

The bit-to-cell demux block 5030 can determine the order of input bit streams such that each bit in an FEC block can be transmitted with appropriate robustness in consideration of both the order of input bit streams and a constellation mapping rule.

The constellation mapper block 5040 can map a bit word input thereto to one constellation. In this case, the constellation mapper block 5040 can additionally perform rotation & Q-delay. That is, the constellation mapper block 5040 can rotate input constellations according to a rotation angle, divide the constellations into an in-phase (I) component and a quadrature-phase (Q) component and delay only the quadrature-phase component by an arbitrary value. Then, the constellation mapper block 5040 can remap the constellations to new constellations using a paired I component and Q component.

The cell interleaver block 5050 can randomly interleave cells corresponding to one FEC block and output the interleaved cells such that cells corresponding to respective FEC blocks can be output in different orders.

The time interleaver block 5060 can interleave cells belonging to a plurality of FEC blocks and output the interleaved cells. Accordingly, the cells corresponding to the FEC blocks are dispersed and transmitted in a period corresponding to a time interleaving depth and thus diversity gain can be obtained.

The second block 5100 processes an input data pipe according to MISO and can include the FEC encoder block, bit interleaver block, bit-to-cell demux block, constellation mapper block, cell interleaver block and time interleaver block in the same manner as the first block 5000. However, the second block 5100 is distinguished from the first block 5000 in that the second block 5100 further includes a MISO processing block 5110. The second block 5100 performs the same procedure including the input operation to the time interleaver operation as those of the first block 5000 and thus description of the corresponding blocks is omitted.

The MISO processing block 5110 can encode input cells according to a MISO encoding matrix providing transmit diversity and output MISO-processed data through two paths. MISO processing according to one embodiment of the present invention can include OSTBC (orthogonal space time block coding)/OSFBC (orthogonal space frequency block coding, Alamouti coding).

The third block 5200 processes an input data pipe according to MIMO and can include the FEC encoder block, bit interleaver block, bit-to-cell demux block, constellation mapper block, cell interleaver block and time interleaver block in the same manner as the second block 5100, as shown in FIG. 5. However, the data processing procedure of the third block 5200 is different from that of the second block 5100 since the third block 5200 includes a MIMO processing block 5220.

That is, in the third block 5200, basic roles of the FEC encoder block and the bit interleaver block are identical to those of the first and second blocks 5000 and 5100 although functions thereof may be different from those of the first and second blocks 5000 and 5100.

The bit-to-cell demux block 5210 can generate as many output bit streams as input bit streams of MIMO processing and output the output bit streams through MIMO paths for MIMO processing. In this case, the bit-to-cell demux block 5210 can be designed to optimize the decoding performance of the reception apparatus in consideration of characteristics of LDPC and MIMO processing.

Basic roles of the constellation mapper block, cell interleaver block and time interleaver block are identical to those of the first and second blocks 5000 and 5100 although functions thereof may be different from those of the first and second blocks 5000 and 5100. As shown in FIG. 5, as many constellation mapper blocks, cell interleaver blocks and time interleaver blocks as the number of MIMO paths for MIMO processing can be present. In this case, the constellation mapper blocks, cell interleaver blocks and time interleaver blocks can operate equally or independently for data input through the respective paths.

The MIMO processing block 5220 can perform MIMO processing on two input cells using a MIMO encoding matrix and output the MIMO-processed data through two paths. The MIMO encoding matrix according to an embodiment of the present invention can include spatial multiplexing, Golden code, full-rate full diversity code, linear dispersion code, etc.

The fourth block 5300 processes the PLS-pre/PLS-post information and can perform SISO or MISO processing.

The basic roles of the bit interleaver block, bit-to-cell demux block, constellation mapper block, cell interleaver block, time interleaver block and MISO processing block included in the fourth block 5300 correspond to those of the second block 5100 although functions thereof may be different from those of the second block 5100.

A shortened/punctured FEC encoder block 5310 included in the fourth block 5300 can process PLS data using an FEC encoding scheme for a PLS path provided for a case in which the length of input data is shorter than a length necessary to perform FEC encoding. Specifically, the shortened/punctured FEC encoder block 5310 can perform BCH encoding on input bit streams, pad 0s corresponding to a desired input bit stream length necessary for normal LDPC encoding, carry out LDPC encoding and then remove the padded 0s to puncture parity bits such that an effective code rate becomes equal to or lower than the data pipe rate.

The blocks included in the first block 5000 to fourth block 5300 may be omitted or replaced by blocks having similar or identical functions according to design

As illustrated in FIG. 5, the coding & modulation module can output the data pipes (or DP data), PLS-pre information and PLS-post information processed for the respective paths to the frame structure module.

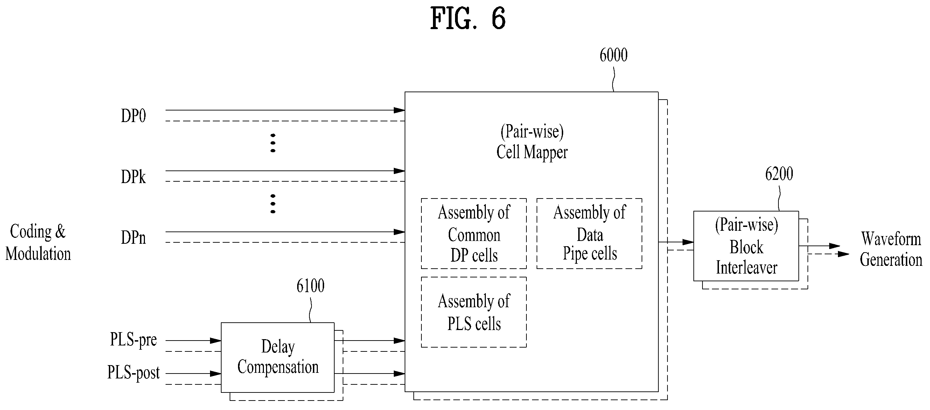

FIG. 6 illustrates a frame structure module according to one embodiment of the present invention.

The frame structure module shown in FIG. 6 corresponds to an embodiment of the frame structure module 1200 illustrated in FIG. 1.

The frame structure module according to one embodiment of the present invention can include at least one cell-mapper 6000, at least one delay compensation module 6100 and at least one block interleaver 6200. The number of cell mappers 6000, delay compensation modules 6100 and block interleavers 6200 can be changed. A description will be given of each module of the frame structure block.

The cell-mapper 6000 can allocate cells corresponding to SISO-, MISO- or MIMO-processed data pipes output from the coding & modulation module, cells corresponding to common data commonly applicable to the data pipes and cells corresponding to the PLS-pre/PLS-post information to signal frames according to scheduling information. The common data refers to signaling information commonly applied to all or some data pipes and can be transmitted through a specific data pipe. The data pipe through which the common data is transmitted can be referred to as a common data pipe and can be changed according to design.

When the apparatus for transmitting broadcast signals according to an embodiment of the present invention uses two output antennas and Alamouti coding is used for MISO processing, the cell-mapper 6000 can perform pair-wise cell mapping in order to maintain orthogonality according to Alamouti encoding. That is, the cell-mapper 6000 can process two consecutive cells of the input cells as one unit and map the unit to a frame. Accordingly, paired cells in an input path corresponding to an output path of each antenna can be allocated to neighboring positions in a transmission frame.

The delay compensation block 6100 can obtain PLS data corresponding to the current transmission frame by delaying input PLS data cells for the next transmission frame by one frame. In this case, the PLS data corresponding to the current frame can be transmitted through a preamble part in the current signal frame and PLS data corresponding to the next signal frame can be transmitted through a preamble part in the current signal frame or in-band signaling in each data pipe of the current signal frame. This can be changed by the designer.

The block interleaver 6200 can obtain additional diversity gain by interleaving cells in a transport block corresponding to the unit of a signal frame. In addition, the block interleaver 6200 can perform interleaving by processing two consecutive cells of the input cells as one unit when the above-described pair-wise cell mapping is performed. Accordingly, cells output from the block interleaver 6200 can be two consecutive identical cells.

When pair-wise mapping and pair-wise interleaving are performed, at least one cell mapper and at least one block interleaver can operate equally or independently for data input through the paths.

The above-described blocks may be omitted or replaced by blocks having similar or identical functions according to design.

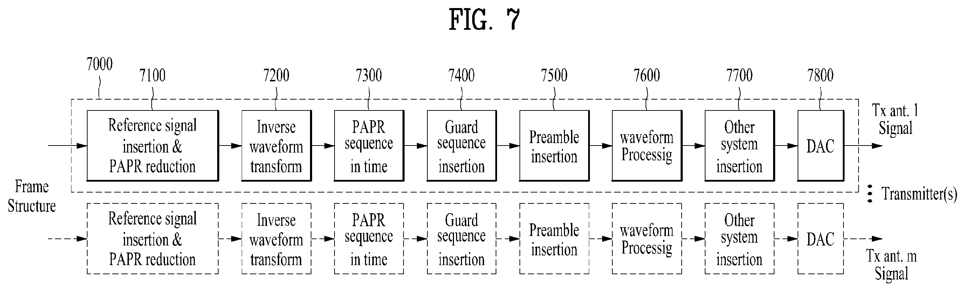

FIG. 7 illustrates a waveform generation module according to an embodiment of the present invention.

The waveform generation module illustrated in FIG. 7 corresponds to an embodiment of the waveform generation module 1300 described with reference to FIG. 1.

The waveform generation module according to an embodiment of the present invention can modulate and transmit as many signal frames as the number of antennas for receiving and outputting signal frames output from the frame structure module illustrated in FIG. 6.

Specifically, the waveform generation module illustrated in FIG. 7 is an embodiment of a waveform generation module of an apparatus for transmitting broadcast signals using m Tx antennas and can include m processing blocks for modulating and outputting frames corresponding to m paths. The m processing blocks can perform the same processing procedure. A description will be given of operation of the first processing block 7000 from among the m processing blocks.

The first processing block 7000 can include a reference signal & PAPR reduction block 7100, an inverse waveform transform block 7200, a PAPR reduction in time block 7300, a guard sequence insertion block 7400, a preamble insertion block 7500, a waveform processing block 7600, other system insertion block 7700 and a DAC (digital analog converter) block 7800.

The reference signal insertion & PAPR reduction block 7100 can insert a reference signal into a predetermined position of each signal block and apply a PAPR reduction scheme to reduce a PAPR in the time domain. If a broadcast transmission/reception system according to an embodiment of the present invention corresponds to an OFDM system, the reference signal insertion & PAPR reduction block 7100 can use a method of reserving some active subcarriers rather than using the same. In addition, the reference signal insertion & PAPR reduction block 7100 may not use the PAPR reduction scheme as an optional feature according to broadcast transmission/reception system.

The inverse waveform transform block 7200 can transform an input signal in a manner of improving transmission efficiency and flexibility in consideration of transmission channel characteristics and system architecture. If the broadcast transmission/reception system according to an embodiment of the present invention corresponds to an OFDM system, the inverse waveform transform block 7200 can employ a method of transforming a frequency domain signal into a time domain signal through inverse FFT operation. If the broadcast transmission/reception system according to an embodiment of the present invention corresponds to a single carrier system, the inverse waveform transform block 7200 may not be used in the waveform generation module.

The PAPR reduction in time block 7300 can use a method for reducing PAPR of an input signal in the time domain. If the broadcast transmission/reception system according to an embodiment of the present invention corresponds to an OFDM system, the PAPR reduction in time block 7300 may use a method of simply clipping peak amplitude. Furthermore, the PAPR reduction in time block 7300 may not be used in the broadcast transmission/reception system according to an embodiment of the present invention since it is an optional feature.

The guard sequence insertion block 7400 can provide a guard interval between neighboring signal blocks and insert a specific sequence into the guard interval as necessary in order to minimize the influence of delay spread of a transmission channel. Accordingly, the reception apparatus can easily perform synchronization or channel estimation. If the broadcast transmission/reception system according to an embodiment of the present invention corresponds to an OFDM system, the guard sequence insertion block 7400 may insert a cyclic prefix into a guard interval of an OFDM symbol.

The preamble insertion block 7500 can insert a signal of a known type (e.g. preamble or preamble symbol) agreed upon between the transmission apparatus and the reception apparatus into a transmission signal such that the reception apparatus can rapidly and efficiently detect a target system signal. If the broadcast transmission/reception system according to an embodiment of the present invention corresponds to an OFDM system, the preamble insertion block 7500 can define a signal frame composed of a plurality of OFDM symbols and insert a preamble symbol into the beginning of each signal frame. That is, the preamble carries basic PLS data and is located in the beginning of a signal frame.

The waveform processing block 7600 can perform waveform processing on an input baseband signal such that the input baseband signal meets channel transmission characteristics. The waveform processing block 7600 may use a method of performing square-root-raised cosine (SRRC) filtering to obtain a standard for out-of-band emission of a transmission signal. If the broadcast transmission/reception system according to an embodiment of the present invention corresponds to a multi-carrier system, the waveform processing block 7600 may not be used.

The other system insertion block 7700 can multiplex signals of a plurality of broadcast transmission/reception systems in the time domain such that data of two or more different broadcast transmission/reception systems providing broadcast services can be simultaneously transmitted in the same RF signal bandwidth. In this case, the two or more different broadcast transmission/reception systems refer to systems providing different broadcast services. The different broadcast services may refer to a terrestrial broadcast service, mobile broadcast service, etc. Data related to respective broadcast services can be transmitted through different frames.

The DAC block 7800 can convert an input digital signal into an analog signal and output the analog signal. The signal output from the DAC block 7800 can be transmitted through m output antennas. A Tx antenna according to an embodiment of the present invention can have vertical or horizontal polarity.

The above-described blocks may be omitted or replaced by blocks having similar or identical functions according to design.

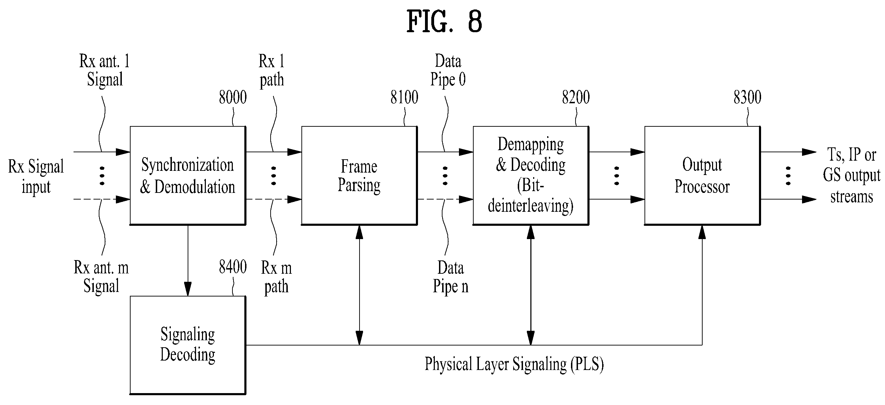

FIG. 8 illustrates a structure of an apparatus for receiving broadcast signals for future broadcast services according to an embodiment of the present invention.

The apparatus for receiving broadcast signals for future broadcast services according to an embodiment of the present invention can correspond to the apparatus for transmitting broadcast signals for future broadcast services, described with reference to FIG. 1. The apparatus for receiving broadcast signals for future broadcast services according to an embodiment of the present invention can include a synchronization & demodulation module 8000, a frame parsing module 8100, a demapping & decoding module 8200, an output processor 8300 and a signaling decoding module 8400. A description will be given of operation of each module of the apparatus for receiving broadcast signals.

The synchronization & demodulation module 8000 can receive input signals through m Rx antennas, perform signal detection and synchronization with respect to a system corresponding to the apparatus for receiving broadcast signals and carry out demodulation corresponding to a reverse procedure of the procedure performed by the apparatus for transmitting broadcast signals.

The frame parsing module 8100 can parse input signal frames and extract data through which a service selected by a user is transmitted. If the apparatus for transmitting broadcast signals performs interleaving, the frame parsing module 8100 can carry out deinterleaving corresponding to a reverse procedure of interleaving. In this case, the positions of a signal and data that need to be extracted can be obtained by decoding data output from the signaling decoding module 8400 to restore scheduling information generated by the apparatus for transmitting broadcast signals.

The demapping & decoding module 8200 can convert the input signals into bit domain data and then deinterleave the same as necessary. The demapping & decoding module 8200 can perform demapping for mapping applied for transmission efficiency and correct an error generated on a transmission channel through decoding. In this case, the demapping & decoding module 8200 can obtain transmission parameters necessary for demapping and decoding by decoding the data output from the signaling decoding module 8400.

The output processor 8300 can perform reverse procedures of various compression/signal processing procedures which are applied by the apparatus for transmitting broadcast signals to improve transmission efficiency. In this case, the output processor 8300 can acquire necessary control information from data output from the signaling decoding module 8400. The output of the output processor 8300 corresponds to a signal input to the apparatus for transmitting broadcast signals and may be MPEG-TSs, IP streams (v4 or v6) and generic streams.

The signaling decoding module 8400 can obtain PLS information from the signal demodulated by the synchronization & demodulation module 8000. As described above, the frame parsing module 8100, demapping & decoding module 8200 and output processor 8300 can execute functions thereof using the data output from the signaling decoding module 8400.

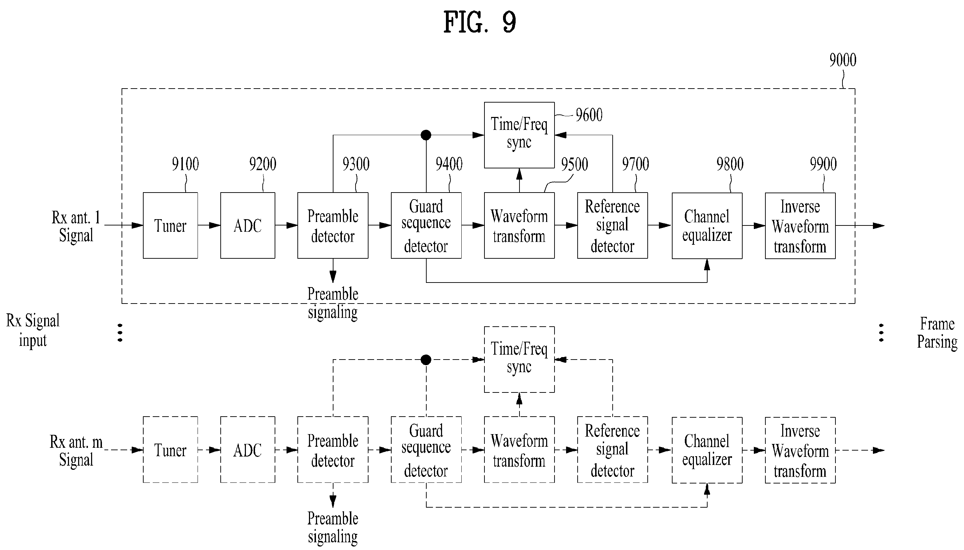

FIG. 9 illustrates a synchronization & demodulation module according to an embodiment of the present invention.

The synchronization & demodulation module shown in FIG. 9 corresponds to an embodiment of the synchronization & demodulation module described with reference to FIG. 8. The synchronization & demodulation module shown in FIG. 9 can perform a reverse operation of the operation of the waveform generation module illustrated in FIG. 7.

As shown in FIG. 9, the synchronization & demodulation module according to an embodiment of the present invention corresponds to a synchronization & demodulation module of an apparatus for receiving broadcast signals using m Rx antennas and can include m processing blocks for demodulating signals respectively input through m paths. The m processing blocks can perform the same processing procedure. A description will be given of operation of the first processing block 9000 from among the m processing blocks.

The first processing block 9000 can include a tuner 9100, an ADC block 9200, a preamble detector 9300, a guard sequence detector 9400, a waveform transform block 9500, a time/frequency synchronization block 9600, a reference signal detector 9700, a channel equalizer 9800 and an inverse waveform transform block 9900.

The tuner 9100 can select a desired frequency band, compensate for the magnitude of a received signal and output the compensated signal to the ADC block 9200.

The ADC block 9200 can convert the signal output from the tuner 9100 into a digital signal.

The preamble detector 9300 can detect a preamble (or preamble signal or preamble symbol) in order to check whether or not the digital signal is a signal of the system corresponding to the apparatus for receiving broadcast signals. In this case, the preamble detector 9300 can decode basic transmission parameters received through the preamble.

The guard sequence detector 9400 can detect a guard sequence in the digital signal. The time/frequency synchronization block 9600 can perform time/frequency synchronization using the detected guard sequence and the channel equalizer 9800 can estimate a channel through a received/restored sequence using the detected guard sequence.

The waveform transform block 9500 can perform a reverse operation of inverse waveform transform when the apparatus for transmitting broadcast signals has performed inverse waveform transform. When the broadcast transmission/reception system according to one embodiment of the present invention is a multi-carrier system, the waveform transform block 9500 can perform FFT. Furthermore, when the broadcast transmission/reception system according to an embodiment of the present invention is a single carrier system, the waveform transform block 9500 may not be used if a received time domain signal is processed in the frequency domain or processed in the time domain.

The time/frequency synchronization block 9600 can receive output data of the preamble detector 9300, guard sequence detector 9400 and reference signal detector 9700 and perform time synchronization and carrier frequency synchronization including guard sequence detection and block window positioning on a detected signal. Here, the time/frequency synchronization block 9600 can feed back the output signal of the waveform transform block 9500 for frequency synchronization.

The reference signal detector 9700 can detect a received reference signal. Accordingly, the apparatus for receiving broadcast signals according to an embodiment of the present invention can perform synchronization or channel estimation.

The channel equalizer 9800 can estimate a transmission channel from each Tx antenna to each Rx antenna from the guard sequence or reference signal and perform channel equalization for received data using the estimated channel.

The inverse waveform transform block 9900 may restore the original received data domain when the waveform transform block 9500 performs waveform transform for efficient synchronization and channel estimation/equalization. If the broadcast transmission/reception system according to an embodiment of the present invention is a single carrier system, the waveform transform block 9500 can perform FFT in order to carry out synchronization/channel estimation/equalization in the frequency domain and the inverse waveform transform block 9900 can perform IFFT on the channel equalized signal to restore transmitted data symbols. If the broadcast transmission/reception system according to an embodiment of the present invention is a multicarrier system, the inverse waveform transform block 9900 may not be used.

The above-described blocks may be omitted or replaced by blocks having similar or identical functions according to design.

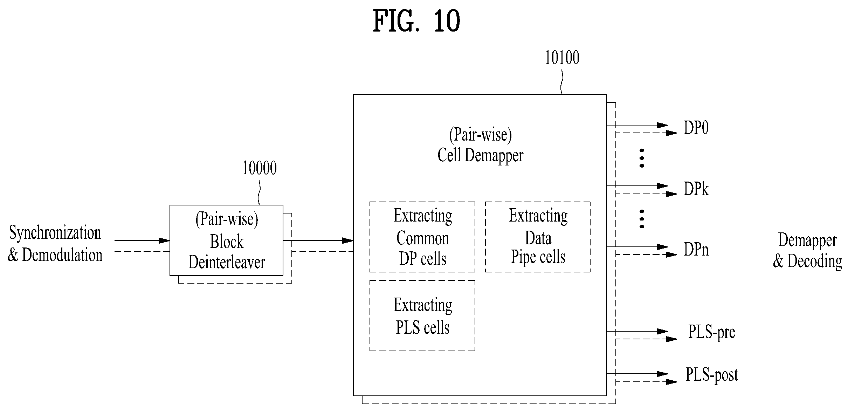

FIG. 10 illustrates a frame parsing module according to an embodiment of the present invention.

The frame parsing module illustrated in FIG. 10 corresponds to an embodiment of the frame parsing module described with reference to FIG. 8. The frame parsing module shown in FIG. 10 can perform a reverse operation of the operation of the frame structure module illustrated in FIG. 6.

As shown in FIG. 10, the frame parsing module according to an embodiment of the present invention can include at least one block interleaver 10000 and at least one cell demapper 10100.

The block interleaver 10000 can deinterleave data input through data paths of the m Rx antennas and processed by the synchronization & demodulation module on a signal block basis. In this case, if the apparatus for transmitting broadcast signals performs pair-wise interleaving as illustrated in FIG. 8, the block interleaver 10000 can process two consecutive pieces of data as a pair for each input path. Accordingly, the block interleaver 10000 can output two consecutive pieces of data even when deinterleaving has been performed. Furthermore, the block interleaver 10000 can perform a reverse operation of the interleaving operation performed by the apparatus for transmitting broadcast signals to output data in the original order.

The cell demapper 10100 can extract cells corresponding to common data, cells corresponding to data pipes and cells corresponding to PLS data from received signal frames. The cell demapper 10100 can merge data distributed and transmitted and output the same as a stream as necessary. When two consecutive pieces of cell input data are processed as a pair and mapped in the apparatus for transmitting broadcast signals, as shown in FIG. 6, the cell demapper 10100 can perform pair-wise cell demapping for processing two consecutive input cells as one unit as a reverse procedure of the mapping operation of the apparatus for transmitting broadcast signals.

In addition, the cell demapper 10100 can extract PLS signaling data received through the current frame as PLS-pre & PLS-post data and output the PLS-pre & PLS-post data.

The above-described blocks may be omitted or replaced by blocks having similar or identical functions according to design.

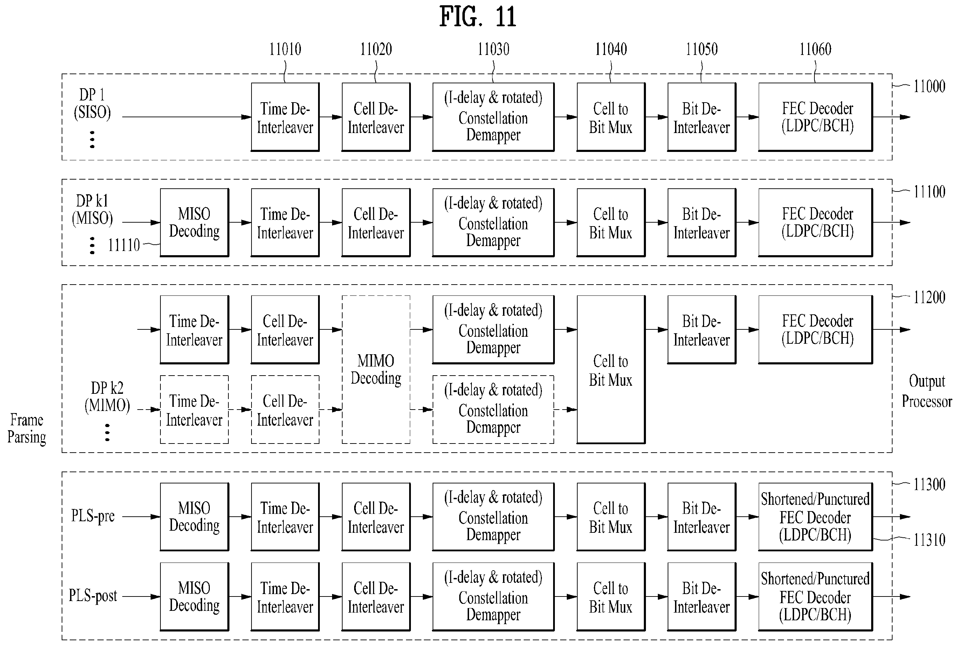

FIG. 11 illustrates a demapping & decoding module according to an embodiment of the present invention.

The demapping & decoding module shown in FIG. 11 corresponds to an embodiment of the demapping & decoding module illustrated in FIG. 8. The demapping & decoding module shown in FIG. 11 can perform a reverse operation of the operation of the coding & modulation module illustrated in FIG. 5.

The coding & modulation module of the apparatus for transmitting broadcast signals according to an embodiment of the present invention can process input data pipes by independently applying SISO, MISO and MIMO thereto for respective paths, as described above. Accordingly, the demapping & decoding module illustrated in FIG. 11 can include blocks for processing data output from the frame parsing module according to SISO, MISO and MIMO in response to the apparatus for transmitting broadcast signals.

As shown in FIG. 11, the demapping & decoding module according to an embodiment of the present invention can include a first block 11000 for SISO, a second block 11100 for MISO, a third block 11200 for MIMO and a fourth block 11300 for processing the PLS-pre/PLS-post information. The demapping & decoding module shown in FIG. 11 is exemplary and may include only the first block 11000 and the fourth block 11300, only the second block 11100 and the fourth block 11300 or only the third block 11200 and the fourth block 11300 according to design. That is, the demapping & decoding module can include blocks for processing data pipes equally or differently according to design.

A description will be given of each block of the demapping & decoding module.

The first block 11000 processes an input data pipe according to SISO and can include a time deinterleaver block 11010, a cell deinterleaver block 11020, a constellation demapper block 11030, a cell-to-bit mux block 11040, a bit deinterleaver block 11050 and an FEC decoder block 11060.

The time deinterleaver block 11010 can perform a reverse process of the process performed by the time interleaver block 5060 illustrated in FIG. 5. That is, the time deinterleaver block 11010 can deinterleave input symbols interleaved in the time domain into original positions thereof.

The cell deinterleaver block 11020 can perform a reverse process of the process performed by the cell interleaver block 5050 illustrated in FIG. 5. That is, the cell deinterleaver block 11020 can deinterleave positions of cells spread in one FEC block into original positions thereof.

The constellation demapper block 11030 can perform a reverse process of the process performed by the constellation mapper block 5040 illustrated in FIG. 5. That is, the constellation demapper block 11030 can demap a symbol domain input signal to bit domain data. In addition, the constellation demapper block 11030 may perform hard decision and output decided bit data. Furthermore, the constellation demapper block 11030 may output a log-likelihood ratio (LLR) of each bit, which corresponds to a soft decision value or probability value. If the apparatus for transmitting broadcast signals applies a rotated constellation in order to obtain additional diversity gain, the constellation demapper block 11030 can perform 2-dimensional LLR demapping corresponding to the rotated constellation. Here, the constellation demapper block 11030 can calculate the LLR such that a delay applied by the apparatus for transmitting broadcast signals to the I or Q component can be compensated.

The cell-to-bit mux block 11040 can perform a reverse process of the process performed by the bit-to-cell demux block 5030 illustrated in FIG. 5. That is, the cell-to-bit mux block 11040 can restore bit data mapped by the bit-to-cell demux block 5030 to the original bit streams.

The bit deinterleaver block 11050 can perform a reverse process of the process performed by the bit interleaver 5020 illustrated in FIG. 5. That is, the bit deinterleaver block 11050 can deinterleave the bit streams output from the cell-to-bit mux block 11040 in the original order.

The FEC decoder block 11060 can perform a reverse process of the process performed by the FEC encoder block 5010 illustrated in FIG. 5. That is, the FEC decoder block 11060 can correct an error generated on a transmission channel by performing LDPC decoding and BCH decoding.

The second block 11100 processes an input data pipe according to MISO and can include the time deinterleaver block, cell deinterleaver block, constellation demapper block, cell-to-bit mux block, bit deinterleaver block and FEC decoder block in the same manner as the first block 11000, as shown in FIG. 11. However, the second block 11100 is distinguished from the first block 11000 in that the second block 11100 further includes a MISO decoding block 11110. The second block 11100 performs the same procedure including time deinterleaving operation to outputting operation as the first block 11000 and thus description of the corresponding blocks is omitted.

The MISO decoding block 11110 can perform a reverse operation of the operation of the MISO processing block 5110 illustrated in FIG. 5. If the broadcast transmission/reception system according to an embodiment of the present invention uses STBC, the MISO decoding block 11110 can perform Alamouti decoding.

The third block 11200 processes an input data pipe according to MIMO and can include the time deinterleaver block, cell deinterleaver block, constellation demapper block, cell-to-bit mux block, bit deinterleaver block and FEC decoder block in the same manner as the second block 11100, as shown in FIG. 11. However, the third block 11200 is distinguished from the second block 11100 in that the third block 11200 further includes a MIMO decoding block 11210. The basic roles of the time deinterleaver block, cell deinterleaver block, constellation demapper block, cell-to-bit mux block and bit deinterleaver block included in the third block 11200 are identical to those of the corresponding blocks included in the first and second blocks 11000 and 11100 although functions thereof may be different from the first and second blocks 11000 and 11100.

The MIMO decoding block 11210 can receive output data of the cell deinterleaver for input signals of the m Rx antennas and perform MIMO decoding as a reverse operation of the operation of the MIMO processing block 5220 illustrated in FIG. 5. The MIMO decoding block 11210 can perform maximum likelihood decoding to obtain optimal decoding performance or carry out sphere decoding with reduced complexity. Otherwise, the MIMO decoding block 11210 can achieve improved decoding performance by performing MMSE detection or carrying out iterative decoding with MMSE detection.

The fourth block 11300 processes the PLS-pre/PLS-post information and can perform SISO or MISO decoding. The fourth block 11300 can carry out a reverse process of the process performed by the fourth block 5300 described with reference to FIG. 5.

The basic roles of the time deinterleaver block, cell deinterleaver block, constellation demapper block, cell-to-bit mux block and bit deinterleaver block included in the fourth block 11300 are identical to those of the corresponding blocks of the first, second and third blocks 11000, 11100 and 11200 although functions thereof may be different from the first, second and third blocks 11000, 11100 and 11200.

The shortened/punctured FEC decoder 11310 included in the fourth block 11300 can perform a reverse process of the process performed by the shortened/punctured FEC encoder block 5310 described with reference to FIG. 5. That is, the shortened/punctured FEC decoder 11310 can perform de-shortening and de-puncturing on data shortened/punctured according to PLS data length and then carry out FEC decoding thereon. In this case, the FEC decoder used for data pipes can also be used for PLS. Accordingly, additional FEC decoder hardware for the PLS only is not needed and thus system design is simplified and efficient coding is achieved.

The above-described blocks may be omitted or replaced by blocks having similar or identical functions according to design.

The demapping & decoding module according to an embodiment of the present invention can output data pipes and PLS information processed for the respective paths to the output processor, as illustrated in FIG. 11.

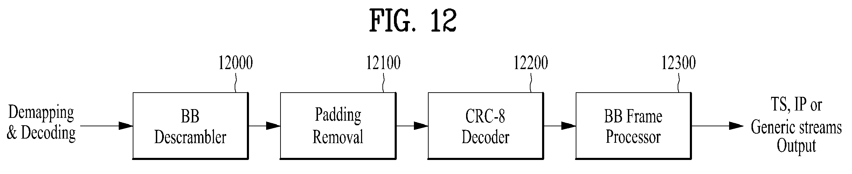

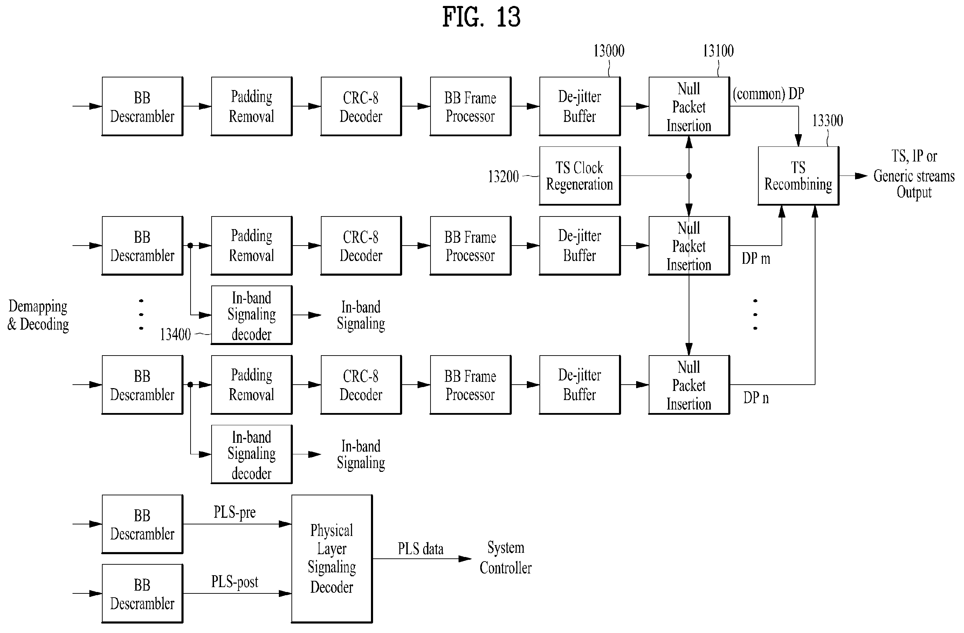

FIGS. 12 and 13 illustrate output processors according to embodiments of the present invention.

FIG. 12 illustrates an output processor according to an embodiment of the present invention.

The output processor illustrated in FIG. 12 corresponds to an embodiment of the output processor illustrated in FIG. 8. The output processor illustrated in FIG. 12 receives a single data pipe output from the demapping & decoding module and outputs a single output stream. The output processor can perform a reverse operation of the operation of the input formatting module illustrated in FIG. 2.

The output processor shown in FIG. 12 can include a BB scrambler block 12000, a padding removal block 12100, a CRC-8 decoder block 12200 and a BB frame processor block 12300.

The BB scrambler block 12000 can descramble an input bit stream by generating the same PRBS as that used in the apparatus for transmitting broadcast signals for the input bit stream and carrying out an XOR operation on the PRBS and the bit stream.

The padding removal block 12100 can remove padding bits inserted by the apparatus for transmitting broadcast signals as necessary.

The CRC-8 decoder block 12200 can check a block error by performing CRC decoding on the bit stream received from the padding removal block 12100.

The BB frame processor block 12300 can decode information transmitted through a BB frame header and restore MPEG-TSs, IP streams (v4 or v6) or generic streams using the decoded information.

The above-described blocks may be omitted or replaced by blocks having similar or identical functions according to design.

FIG. 13 illustrates an output processor according to another embodiment of the present invention.

The output processor shown in FIG. 13 corresponds to an embodiment of the output processor illustrated in FIG. 8. The output processor shown in FIG. 13 receives multiple data pipes output from the demapping & decoding module. Decoding multiple data pipes can include a process of merging common data commonly applicable to a plurality of data pipes and data pipes related thereto and decoding the same or a process of simultaneously decoding a plurality of services or service components (including a scalable video service) by the apparatus for receiving broadcast signals.

The output processor shown in FIG. 13 can include a BB descrambler block, a padding removal block, a CRC-8 decoder block and a BB frame processor block as the output processor illustrated in FIG. 12. The basic roles of these blocks correspond to those of the blocks described with reference to FIG. 12 although operations thereof may differ from those of the blocks illustrated in FIG. 12.

A de-jitter buffer block 13000 included in the output processor shown in FIG. 13 can compensate for a delay, inserted by the apparatus for transmitting broadcast signals for synchronization of multiple data pipes, according to a restored TTO (time to output) parameter.

A null packet insertion block 13100 can restore a null packet removed from a stream with reference to a restored DNP (deleted null packet) and output common data.

A TS clock regeneration block 13200 can restore time synchronization of output packets based on ISCR (input stream time reference) information.

A TS recombining block 13300 can recombine the common data and data pipes related thereto, output from the null packet insertion block 13100, to restore the original MPEG-TSs, IP streams (v4 or v6) or generic streams. The TTO, DNT and ISCR information can be obtained through the BB frame header.

An in-band signaling decoding block 13400 can decode and output in-band physical layer signaling information transmitted through a padding bit field in each FEC frame of a data pipe.

The output processor shown in FIG. 13 can BB-descramble the PLS-pre information and PLS-post information respectively input through a PLS-pre path and a PLS-post path and decode the descrambled data to restore the original PLS data. The restored PLS data is delivered to a system controller included in the apparatus for receiving broadcast signals. The system controller can provide parameters necessary for the synchronization & demodulation module, frame parsing module, demapping & decoding module and output processor module of the apparatus for receiving broadcast signals.

The above-described blocks may be omitted or replaced by blocks having similar or identical functions according to design.

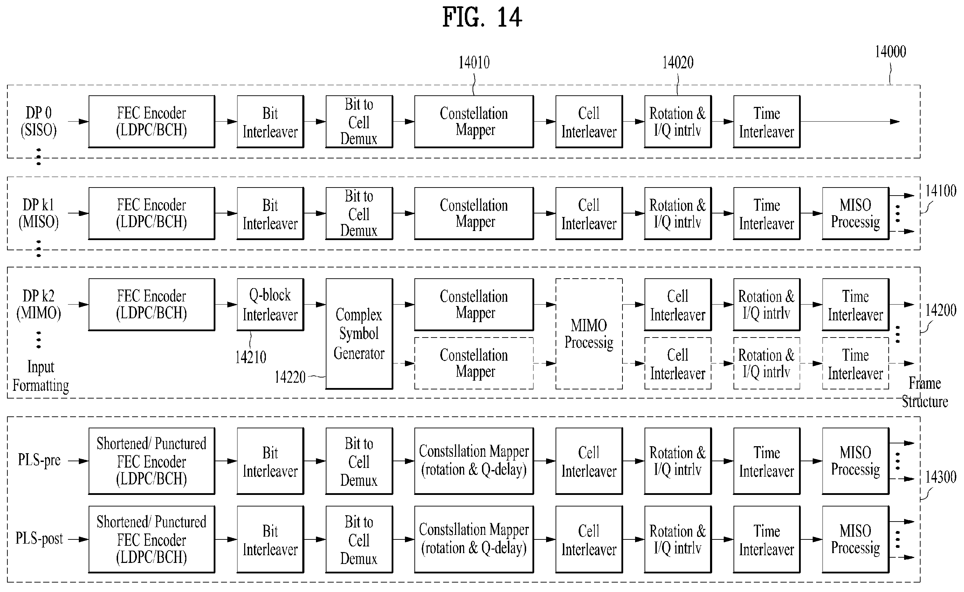

FIG. 14 illustrates a coding & modulation module according to another embodiment of the present invention.

The coding & modulation module shown in FIG. 14 corresponds to another embodiment of the coding & modulation module illustrated in FIGS. 1 to 5.

To control QoS for each service or service component transmitted through each data pipe, as described above with reference to FIG. 5, the coding & modulation module shown in FIG. 14 can include a first block 14000 for SISO, a second block 14100 for MISO, a third block 14200 for MIMO and a fourth block 14300 for processing the PLS-pre/PLS-post information. In addition, the coding & modulation module can include blocks for processing data pipes equally or differently according to the design. The first to fourth blocks 14000 to 14300 shown in FIG. 14 are similar to the first to fourth blocks 5000 to 5300 illustrated in FIG. 5.

However, the first to fourth blocks 14000 to 14300 shown in FIG. 14 are distinguished from the first to fourth blocks 5000 to 5300 illustrated in FIG. 5 in that a constellation mapper 14010 included in the first to fourth blocks 14000 to 14300 has a function different from the first to fourth blocks 5000 to 5300 illustrated in FIG. 5, a rotation & I/Q interleaver block 14020 is present between the cell interleaver and the time interleaver of the first to fourth blocks 14000 to 14300 illustrated in FIG. 14 and the third block 14200 for MIMO has a configuration different from the third block 5200 for MIMO illustrated in FIG. 5. The following description focuses on these differences between the first to fourth blocks 14000 to 14300 shown in FIG. 14 and the first to fourth blocks 5000 to 5300 illustrated in FIG. 5.

The constellation mapper block 14010 shown in FIG. 14 can map an input bit word to a complex symbol. However, the constellation mapper block 14010 may not perform constellation rotation, differently from the constellation mapper block shown in FIG. 5. The constellation mapper block 14010 shown in FIG. 14 is commonly applicable to the first, second and third blocks 14000, 14100 and 14200, as described above.

The rotation & I/Q interleaver block 14020 can independently interleave in-phase and quadrature-phase components of each complex symbol of cell-interleaved data output from the cell interleaver and output the in-phase and quadrature-phase components on a symbol-by-symbol basis. The number of number of input data pieces and output data pieces of the rotation & I/Q interleaver block 14020 is two or more which can be changed by the designer. In addition, the rotation & I/Q interleaver block 14020 may not interleave the in-phase component.

The rotation & I/Q interleaver block 14020 is commonly applicable to the first to fourth blocks 14000 to 14300, as described above. In this case, whether or not the rotation & I/Q interleaver block 14020 is applied to the fourth block 14300 for processing the PLS-pre/post information can be signaled through the above-described preamble.

The third block 14200 for MIMO can include a Q-block interleaver block 14210 and a complex symbol generator block 14220, as illustrated in FIG. 14.

The Q-block interleaver block 14210 can permute a parity part of an FEC-encoded FEC block received from the FEC encoder. Accordingly, a parity part of an LDPC H matrix can be made into a cyclic structure like an information part. The Q-block interleaver block 14210 can permute the order of output bit blocks having Q size of the LDPC H matrix and then perform row-column block interleaving to generate final bit streams.

The complex symbol generator block 14220 receives the bit streams output from the Q-block interleaver block 14210, maps the bit streams to complex symbols and outputs the complex symbols. In this case, the complex symbol generator block 14220 can output the complex symbols through at least two paths. This can be modified by the designer.

The above-described blocks may be omitted or replaced by blocks having similar or identical functions according to design.

The coding & modulation module according to another embodiment of the present invention, illustrated in FIG. 14, can output data pipes, PLS-pre information and PLSpost information processed for respective paths to the frame structure module.

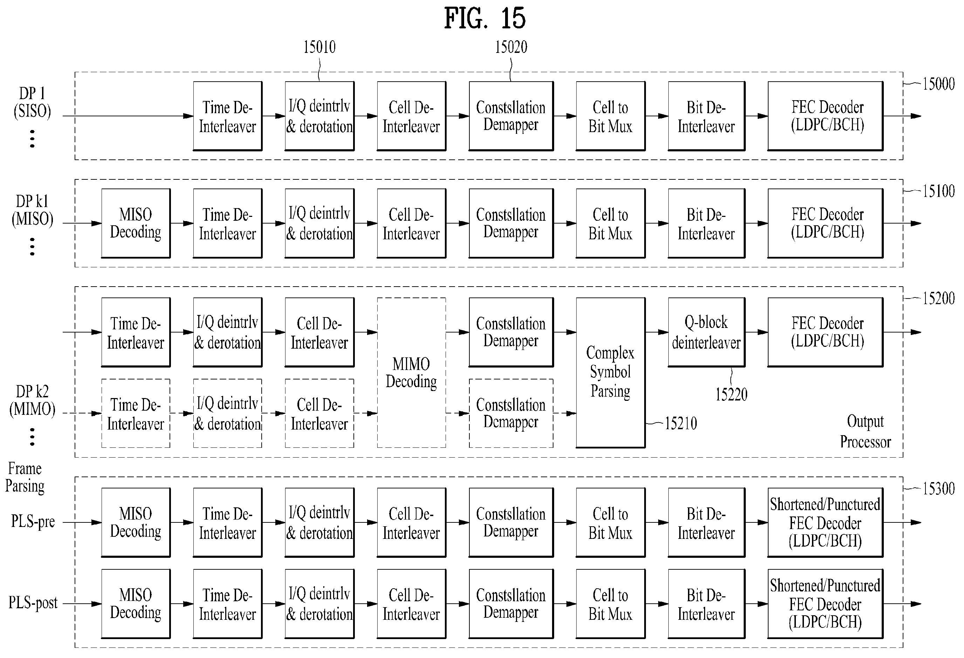

FIG. 15 illustrates a demapping & decoding module according to another embodiment of the present invention.

The demapping & decoding module shown in FIG. 15 corresponds to another embodiment of the demapping & decoding module illustrated in FIG. 11. The demapping & decoding module shown in FIG. 15 can perform a reverse operation of the operation of the coding & modulation module illustrated in FIG. 14.

As shown in FIG. 15, the demapping & decoding module according to another embodiment of the present invention can include a first block 15000 for SISO, a second block 11100 for MISO, a third block 15200 for MIMO and a fourth block 14300 for processing the PLS-pre/PLS-post information. In addition, the demapping & decoding module can include blocks for processing data pipes equally or differently according to design. The first to fourth blocks 15000 to 15300 shown in FIG. 15 are similar to the first to fourth blocks 11000 to 11300 illustrated in FIG. 11.

However, the first to fourth blocks 15000 to 15300 shown in FIG. 15 are distinguished from the first to fourth blocks 11000 to 11300 illustrated in FIG. 11 in that an I/Q deinterleaver and derotation block 15010 is present between the time interleaver and the cell deinterleaver of the first to fourth blocks 15000 to 15300, a constellation mapper 15010 included in the first to fourth blocks 15000 to 15300 has a function different from the first to fourth blocks 11000 to 11300 illustrated in FIG. 11 and the third block 15200 for MIMO has a configuration different from the third block 11200 for MIMO illustrated in FIG. 11. The following description focuses on these differences between the first to fourth blocks 15000 to 15300 shown in FIG. 15 and the first to fourth blocks 11000 to 11300 illustrated in FIG. 11.

The I/Q deinterleaver & derotation block 15010 can perform a reverse process of the process performed by the rotation & I/Q interleaver block 14020 illustrated in FIG. 14. That is, the I/Q deinterleaver & derotation block 15010 can deinterleave I and Q components I/Q-interleaved and transmitted by the apparatus for transmitting broadcast signals and derotate complex symbols having the restored I and Q components.

The I/Q deinterleaver & derotation block 15010 is commonly applicable to the first to fourth blocks 15000 to 15300, as described above. In this case, whether or not the I/Q deinterleaver & derotation block 15010 is applied to the fourth block 15300 for processing the PLS-pre/post information can be signaled through the above-described preamble.

The constellation demapper block 15020 can perform a reverse process of the process performed by the constellation mapper block 14010 illustrated in FIG. 14. That is, the constellation demapper block 15020 can demap cell-deinterleaved data without performing derotation.

The third block 15200 for MIMO can include a complex symbol parsing block 15210 and a Q-block deinterleaver block 15220, as shown in FIG. 15.

The complex symbol parsing block 15210 can perform a reverse process of the process performed by the complex symbol generator block 14220 illustrated in FIG. 14. That is, the complex symbol parsing block 15210 can parse complex data symbols and demap the same to bit data. In this case, the complex symbol parsing block 15210 can receive complex data symbols through at least two paths.

The Q-block deinterleaver block 15220 can perform a reverse process of the process carried out by the Q-block interleaver block 14210 illustrated in FIG. 14. That is, the Q-block deinterleaver block 15220 can restore Q size blocks according to row-column deinterleaving, restore the order of permuted blocks to the original order and then restore positions of parity bits to original positions according to parity deinterleaving.

The above-described blocks may be omitted or replaced by blocks having similar or identical functions according to design.

As illustrated in FIG. 15, the demapping & decoding module according to another embodiment of the present invention can output data pipes and PLS information processed for respective paths to the output processor.

As shown in FIG. 2, the input formatting module according to an embodiment of the present invention can include the mode adaptation module 2000 and the stream adaptation module 2100.

Referring to FIG. 2, the mode adaptation module 2000 can include the input interface block 2010, the CRC-8 encoder block 2020 and the BB header insertion block 2030. Detailed operation of each block has been described above.

A description will be given of detailed operation of the mode adaptation module 2000 when an input stream is input to the input formatting module 1000.

The mode adaptation module 2000 according to an embodiment of the present invention can classify input streams on the basis of a standard for coding and modulation or services or service components and output the input streams. The mode adaptation module 2000 can transmit a data stream classified per service or service component to the stream adaptation module 2100 through a plurality of data pipes.

Streams that can be input to the mode adaptation module according to an embodiment of the present invention can include IP streams. IP streams can include IP datagram packets of various sizes. An IP datagram packet can include an IP packet header.

In general, a maximum transmission unit (MTU) of IP packets transmitted over Ethernet can be set to 1500 bytes. As sizes of broadcast signals for future broadcast services increase, broadcast signals may exceed the MTU of IP packets. In this case, to transmit broadcast signals through IP packets via Ethernet, broadcasting stations or servers may split broadcast signals on the basis of the MTU (1500 bytes) of the IP packets and transmit the same. The size of the split IP packet may be equal to or smaller than the MTU. When one broadcast signal is split into a plurality of IP packets, information included in headers of the IP packets may be redundantly transmitted.

An apparatus for transmitting broadcast signals according to an embodiment of the present invention can compress IP packet headers for efficient transmission when a plurality of IP packets transmitted over Ethernet is input thereto. The apparatus for transmitting broadcast signals according to an embodiment of the present invention can extend an MTU and merge the plurality of IP packets when the IP packets are input thereto so as to generate one IP packet. Accordingly, the plurality of IP packet headers can be reconfigured as one merged IP packet header to reduce IP header overhead.

The apparatus for transmitting broadcast signals according to an embodiment of the present invention can transmit an MTU value of the input IP packets such that an apparatus for receiving broadcast signals can restore a broadcast signal in the form of the plurality of IP packets input to the apparatus for transmitting broadcast signals.

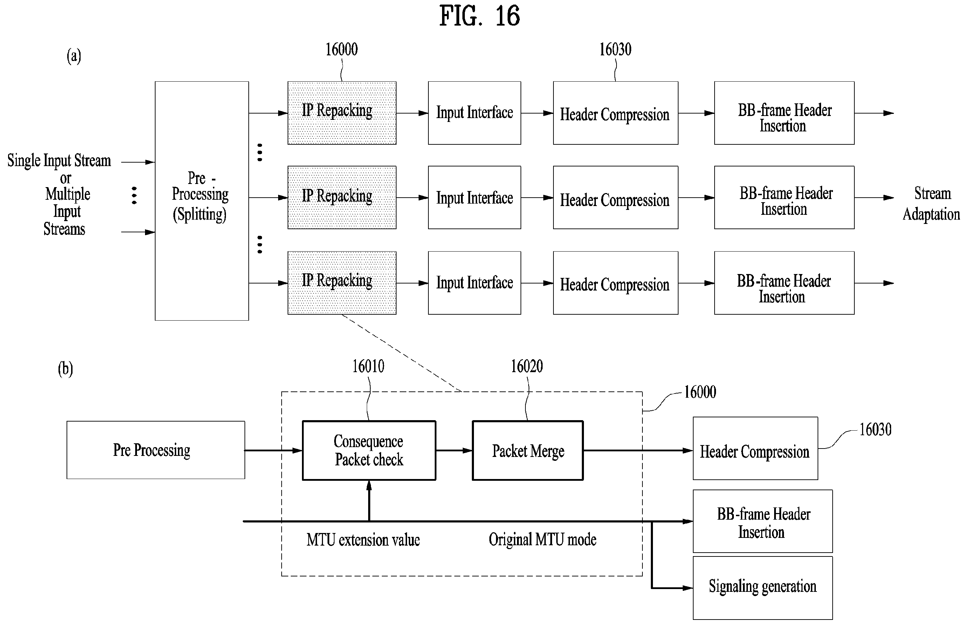

FIG. 16 illustrates a mode adaptation module of an apparatus for transmitting broadcast signals according to another embodiment of the present invention.

FIG. 16(a) shows a mode adaptation module applicable when an input stream is an IP stream.

FIG. 16(b) shows an IP repacking module 16000 of the mode adaptation module applicable when an input stream is an IP stream.

The mode adaptation module according to another embodiment of the present invention can demultiplex one or more input IP streams into streams per service or service component, transmitted through DPs.

A description will be given of the mode adaptation module of the input formatting module.

(a) The input formatting module 1000 of the apparatus for transmitting broadcast signals according to the embodiment of the present invention can receive one or more IP streams (v4/v6) as described above.

The mode adaptation module 2000 of the input formatting module, shown in FIG. 3, can include a pre-processing module, an IP repacking module 16000, an input interface module, a header compression module and a BB-frame header insertion module. A description will be given of operation of each module. Operations of the BB-frame header insertion module and the input interface module correspond to those described with reference to FIGS. 2 and 3 and thus description thereof is omitted.

The pre-processing module can split a plurality of IP streams input to the apparatus for transmitting broadcast signals into service data or service component (video, audio, etc.) data and output the service data or service component data. The service data or service component data split by the pre-processing module can be input to each IP repacking module 16000 per DP.

A description will be given of detailed operation of the IP repacking module 16000.

(b) The IP repacking module 16000 can include a consequence packet check module 16010 and a packet merge module 16020.

The consequence packet check module 16010 can receive service data or service component data and an MTU extension value per DP from the pre-processing module. The MTU extension value input to the consequence packet check module 16010 may be 8000 bytes or 16000 bytes. The MTU extension value is exemplary and may be changed to an appropriate value according to design.

The consequence packet check module can determine whether the service data or service component data input thereto is consequence packets. The consequence packets refer to two or more IP packets carrying the same service or the same service component. The consequence packets are generated when a broadcasting station transmits large-capacity data (e.g. HDTV or UDTV video component data) in the form of IP packets over Ethernet.

An example of generating consequence packets and a method by which the consequence packet check module determines whether input service data or service component data is consequence packets will be described in detail later. A packet including an IP header, from among consequence packets, may be referred to as a consequence IP packet. A consequence IP packet input to the input formatting module according to an embodiment of the present invention may be referred to as a fragmented IP packet.

The packet merge module 16020 can merge IP packet payloads of IP packets determined as consequence packets by the consequence packet check module 16010. The size of the merged IP packet payloads can be determined by the consequence packet check module on the basis of the MTU extension value input thereto.

The header compression module 16030 according to another embodiment of the present invention can compress packet headers included in input streams to increase transmission efficiency. The header compression module 16030 can remove redundant IP packet headers at the transmitting stage and compress packet headers such that a receiver does not redundantly receive a known type signal (IP packet header in the present embodiment). Otherwise, the header compression module 16030 may reconfigure headers of consequence IP packets as one IP packet header and compress the IP packet header. A method for reconfiguring IP packet headers will be described later.

The MTU extension value output from the pre-processing module and input to the consequence packet check module and MTU (original MTU mode) information output from the pre-processing module and used for transmission over Ethernet can be input to the BB-header insertion module or a signaling generation module.

The MTU (original MTU mode) information output from the pre-processing module and used for transmission over Ethernet can be included in a BB frame header or signaling information and transmitted. The original MTU mode information can be used for a reception apparatus to restore IP packets or to restore and retransmit the IP packets.

The signaling information can include information indicating whether the header compression module 16030 has performed packet header compression.

Operation of the IP repacking module 16000 can be performed in the header compression module 16030.

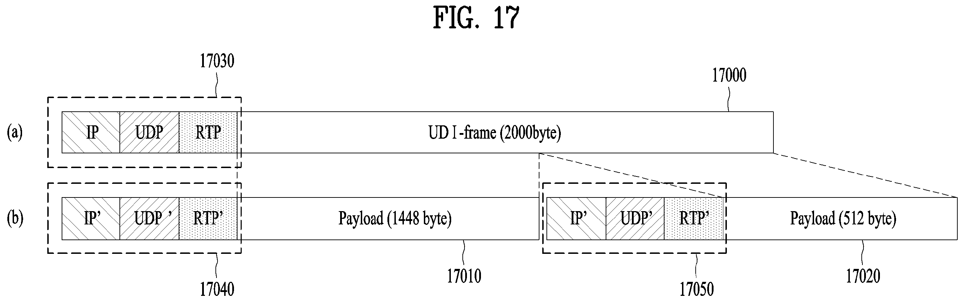

FIG. 17 illustrates an example of splitting an IP packet when the IP packet is transmitted over Ethernet.

FIG. 17(a) shows an IP packet including an ultra definition I-frame (UD I-frame) 17000 generated by a broadcasting station. Here, the data size of the UD I-frame is 2000 bytes. The IP packet can include an IP packet header 17030 and the UD I-frame 17000.

The IP packet header 17030 can include an Internet protocol (IP) header IP, a user datagram protocol (UDP) header UDP and a real time protocol (RTP) header RTP, as shown in FIG. 17. The IP header can include IP address information. The IP address information refers to information for identifying devices on a computer network. The UDP header can include port number information. The port number information refers to a number that identifies a virtual logical communication connecting stage used in UDP. The RTP header can include timestamp information. The timestamp information refers to information indicating a time relation between packets.

FIG. 17(b) shows an example of splitting an IP packet including a UD I-frame (2000 bytes) into two IP packets when the IP packet is transmitted over Ethernet and an MTU is limited to 1500 bytes.

Here, two IP packets shown in FIG. 17(b) are generated by splitting the IP packet including the UD I-frame and can be referred to as consequence packets.

IP packet headers 17040 and 17050 of the two consequence packets include the same IP address information, the same port number information and the same timestamp information. IP packet payloads of the two consequence packets respectively have sizes of 1448 bytes 17010 and 512 bytes 17050. Otherwise, the IP packet payloads of the two consequence packets may respectively have sizes of 1448 bytes 17010 and 552 bytes. In this case, the sum of the IP packet payloads of the consequence packets can correspond to the size (2000 bytes) of the data included in the UD I-frame.

In the case of IPv4, the IP packet header size can be changed. Accordingly, a check sum value can be varied as the IP packet header size of each IP packet is changed when an IP packet is split into consequence packets.

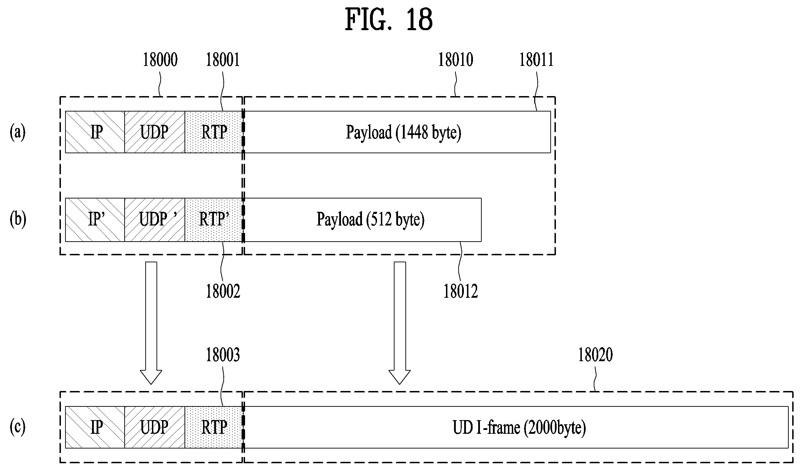

FIG. 18 illustrates IP packets (a) and (b) input to the input formatting module according to another embodiment of the present invention and an IP packet (c) output from the input formatting module after IP repacking.

FIG. 18(a) shows an IP packet including an IP packet header 18001 and an IP packet payload (1448 bytes) 18011.

FIG. 18(b) shows an IP packet including an IP packet header 18002 and an IP packet payload (512 bytes) 18012.

FIG. 18(c) shows an IP packet including an IP packet header 18003 and an IP packet payload (2000 bytes) 18020. FIG. 18(c) illustrates an IP packet which can be output from the IP repacking module according to another embodiment of the present invention by performing an IP repacking method on the IP packets shown in (a) and (b).

The IP repacking module can merge the IP packet payloads 18010 to output the merged IP packet payload 18020.

The header compression module can reconfigure IP packet headers 18000 and output the reconfigured IP packet header 18003. Detailed operations of the IP repacking module and the header compression module will be described later.

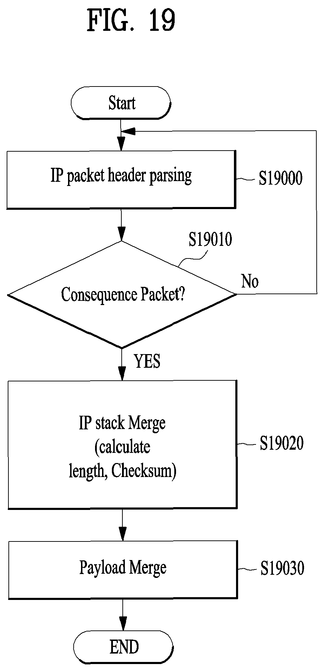

FIG. 19 is a flowchart illustrating an IP repacking method according to another embodiment of the present invention.

A description will be given of the IP repacking method performed in the IP repacking module of the input formatting module.

The IP repacking module parses IP packet headers of input IP packets from the input IP packets. The IP repacking module can compare IP address information, port number information and timestamp information included in two parsed IP packet headers. The IP repacking module can merge the two IP packets upon determining that the two IP packets have been split from the same UID I-frame.

The pre-processing module can split IP streams, from among received input streams, into service data or service component data per DP. The IP repacking module can parse IP packet headers from the service data or service component data split per DP (S19000). The IP repacking module can compare the first and second parsed IP packet headers to determine whether IP packets corresponding to the IP packet headers are consequence packets (S19010). The IP repacking module can determine whether received IP packets are consequence packets on the basis of information in the headers of the received IP packets.

The IP repacking module can calculate the sum of sizes (or lengths) of payloads of the consequence IP packets and the checksum (S19020). The header compression module can generate an IP packet header of merged consequence IP packets on the basis of the calculated size (or length) and checksum of the consequence IP packet payloads. The IP repacking module may generate the IP packet header of the merged consequence IP packets.

The IP repacking module can merge the payloads of the two IP packets determined to be consequence IP packets into one IP packet payload (S19030).

The IP repacking module can merge the payloads of the two consequence IP packets into one IP packet payload on the basis of the data structure of the UD I-frame prior to being split into the two consequence IP packets. The IP packet header can include information on the data structure of the UD I-frame.

The aforementioned IP repacking method applied by the input formatting module to two consequence IP packets is an embodiment and can be applied to two or more consequence IP packets. In addition, the IP header, the UDP header and the RTP header included in an IP packet header are exemplary and the present invention is not limited thereto. Furthermore, the MTU value input to the IP repacking module can be changed according to design.

A description will be given of improved performance results when the IP repacking method according to the embodiment of the present invention is applied.

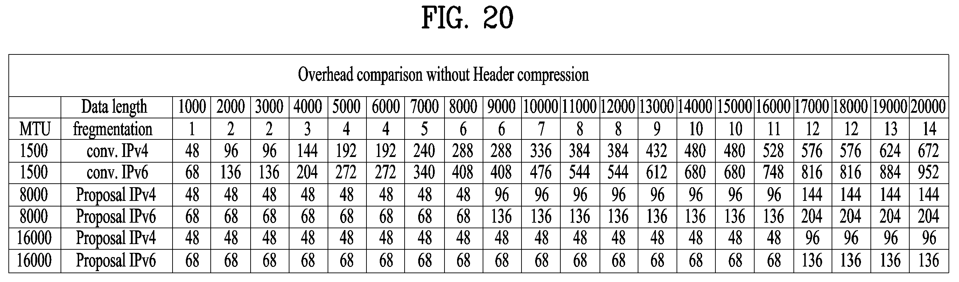

FIG. 20 is a table showing comparison of overhead sizes of packet headers when the MTUs of IPv4 and IPv6 packets to which header compression is not applied are 1500, 8000 and 16000. The unit of digits shown in the table is bytes. The unit is omitted in the following description.

When the MTU is 1500, the number (fragmentation: 1, 2, 3, ...) of fragments of the IPv4 and IPv6 packets increases as the data lengths of both the IPv4 and IPv6 packets increase (1000, 2000, 3000...). Overhead increases in proportion to the increasing number of fragments of the IP packets. Here, the IPv6 packet has larger overhead than the IPv4 packet.

When the MTU is 800 and 16000 and data length is 1000, the IPv4 and IPv6 packets have the same overhead values, 48 and 68, as those when the MTU is 1500. However, the overhead values increase in different aspects as the data length increases, compared to the overhead values when the MTU is 1500.

When the MTU is 8000 and the data length is in the range of 1000 to 8000, overhead values of the IPv4 and IPv6 packets are respectively fixed to 48 and 68.

When the MTU is 8000 and the data length is in the range of 9000 to 16000, the overhead values of the IPv4 and IPv6 packets are respectively fixed to 96 and 136.

When the MTU is 8000 and the data length is in the range of 17000 to 20000, the overhead values of the IPv4 and IPv6 packets are respectively fixed to 144 and 204.

When the MTU is 16000 and the data length is in the range of 1000 to 16000, the overhead values of the IPv4 and IPv6 packets are respectively fixed to 48 and 68.

When the MTU is 16000 and the data length is in the range of 16000 to 20000, the overhead values of the IPv4 and IPv6 packets are respectively fixed to 96 and 136.

Accordingly, when the size of data transmitted from the apparatus for transmitting broadcast signals according to an embodiment of the present invention increases, an overhead increase rate decreases as the MTU increases.

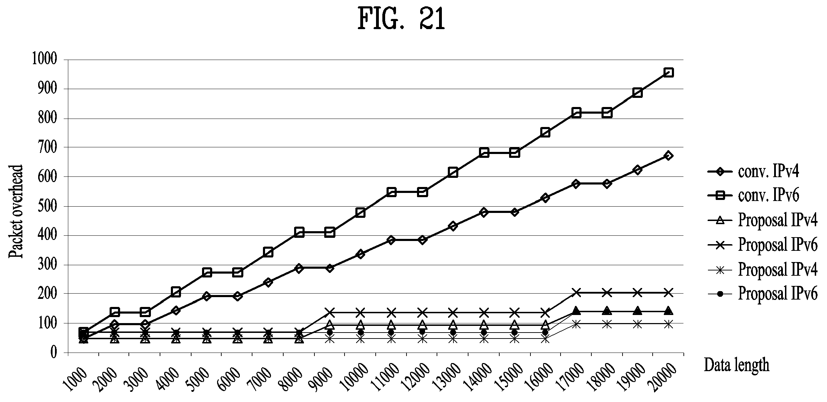

FIG. 21 is a graph showing the table of FIG. 20.

The horizontal axis represents the length of an IP packet payload that can be included in one IP packet, that is, data length.

The vertical axis represents data overhead.

It can be confirmed from the graph that the overhead increase rate decreases as the MTU increases and the data length increases while the overhead is fixed when the data length is as small as 100, as shown in the table of FIG. 20.

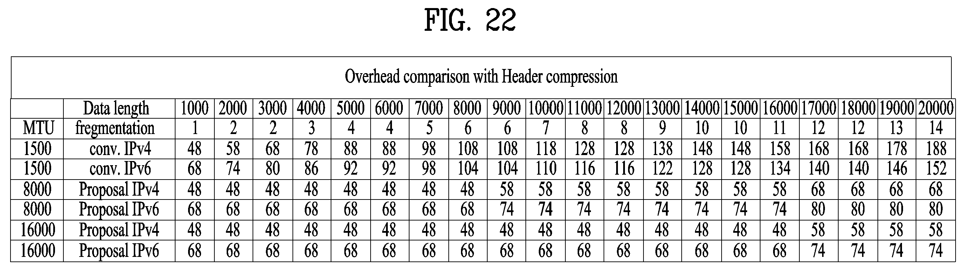

FIG. 22 is a table showing comparison of overhead sizes of packet headers when the MTUs of IPv4 and IPv6 packets to which header compression is applied are 1500, 8000 and 16000. The unit of digits shown in the table is bytes. The unit is omitted in the following description.

When the MTU is 1500, the number (fragmentation: 1, 2, 3, ...) of fragments of the IPv4 and IPv6 packets increases as the data lengths of both the IPv4 and IPv6 packets increase (1000, 2000, 3000...). Overhead increases in proportion to data length increase. Here, the IPv6 packet has larger overhead than the IPv4 packet.

When the MTU is 800 and 16000 and data length is 1000, the IPv4 and IPv6 packets have the same overhead values, 48 and 68, as those when the MTU is 1500. The overhead values correspond to those when header compression is not applied. However, the overhead values increase in different aspects as the data length increases, compared to the overhead values when the MTU is 1500.

When the MTU is 8000 and the data length is in the range of 1000 to 8000, overhead values of the IPv4 and IPv6 packets are respectively fixed to 48 and 68.

When the MTU is 8000 and the data length is in the range of 9000 to 16000, the overhead values of the IPv4 and IPv6 packets are respectively fixed to 56 and 74.

When the MTU is 8000 and the data length is in the range of 17000 to 20000, the overhead values of the IPv4 and IPv6 packets are respectively fixed to 68 and 80.

When the MTU is 16000 and the data length is in the range of 1000 to 16000, the overhead values of the IPv4 and IPv6 packets are respectively fixed to 48 and 68.

When the MTU is 16000 and the data length is in the range of 16000 to 20000, the overhead values of the IPv4 and IPv6 packets are respectively fixed to 58 and 74.

Overhead when header compression is applied is less than overhead when header compression is not applied.

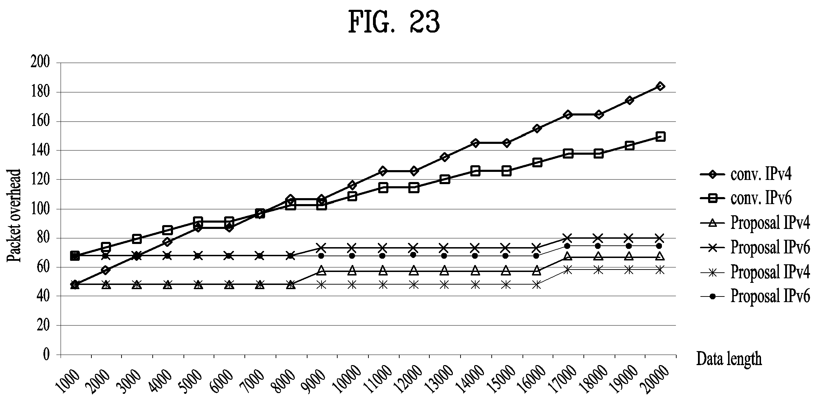

FIG. 23 is a graph showing the table of FIG. 22.

The horizontal axis represents the length of an IP packet payload that can be included in one IP packet, that is, data length.

The vertical axis represents data overhead.

It can be confirmed from the graph that the overhead increase rate decreases as the MTU increases and the data length increases while the overhead is fixed when the data length is as small as 100, as shown in the table of FIG. 22. In addition, it can be known that overhead when header compression is applied is less than overhead when header compression is not applied even when the MTU extension value is identical in the two cases.

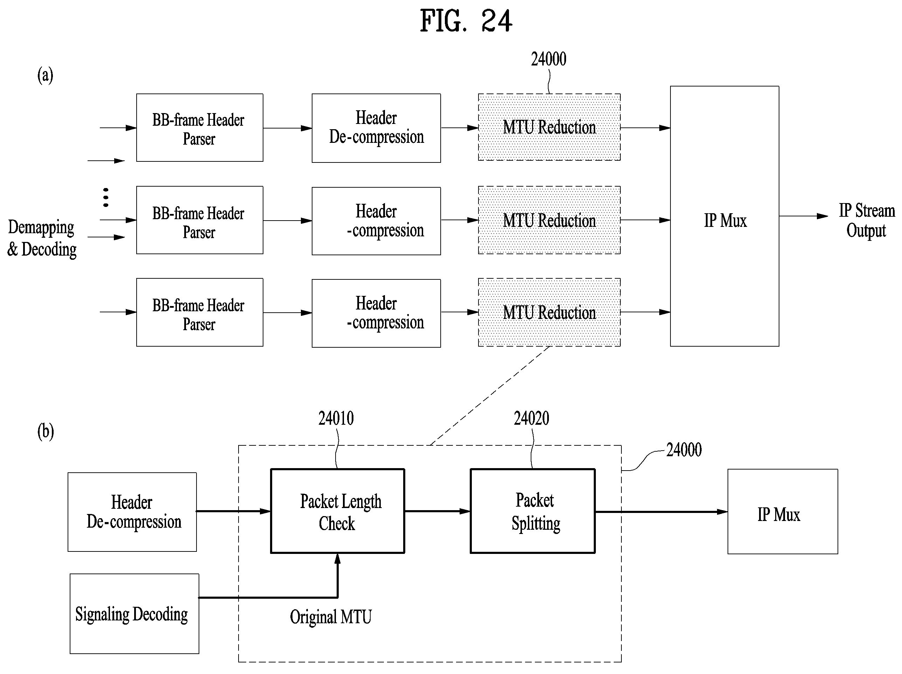

FIG. 24 illustrates an output processor module 8300 of an apparatus for receiving broadcast signals according to another embodiment of the present invention.

The output processor module 8300 can perform reverse procedures of various compression/signal processing procedures applied to increase transmission efficiency in an apparatus for transmitting broadcast signals. The output processor module 8300 can include a BB-frame header parser module, a header decompression module, an MTU reduction module and an IP multiplexor module. The output processor module of the apparatus for receiving broadcast signals according to an embodiment of the present invention can perform a reverse procedure of the procedure of the input formatting module of the apparatus for transmitting broadcast signals according to an embodiment of the present invention. The MTU reduction module can include a packet length check module and a packet splitting module. Detailed operation of each module will now be described.

The BB-frame header parser module can parse a header from service data demapped and decoded in the form of a BB frame. The BB-frame header parser module can parse a header, which has been inserted into a BB frame by the BB-frame header insertion module 2030 of the apparatus for transmitting broadcast signals.

The header decompression module can restore headers, which have been compressed by the header compression module of the apparatus for transmitting broadcast signals by removing or reconfiguring redundant headers.

The MTU reduction module 24000 can include the packet length check module 14010 and the packet splitting module 14020. The MTU reduction module can be used when the apparatus for receiving broadcast signals according to an embodiment of the present invention retransmits received IP packets over Ethernet or converts received IP packets into IP packets input from the apparatus for transmitting broadcast signals over Ethernet.

The packet length check module 24010 can determine whether IP packets input thereto have been merged on the basis of original MTU mode information included in signaling information or a BB frame header.

Upon determining that the input IP packets have been merged, the packet length check module can output the merged IP packets and the original MTU mode information to the packet splitting module 24020. The packet splitting module 24020 can split the input IP packets on the basis of the original MTU mode information input thereto. The packet length check module can calculate a cyclic redundancy check (CRC) and insert the same into the split IP packets.

The aforementioned modules included in the output processor module can be independently applied to an IP packet per DP.

The IP packet independently processed and output per DP can be input to the IP multiplexor module.

The IP multiplexor module can output input IP packets in the form of IP streams.

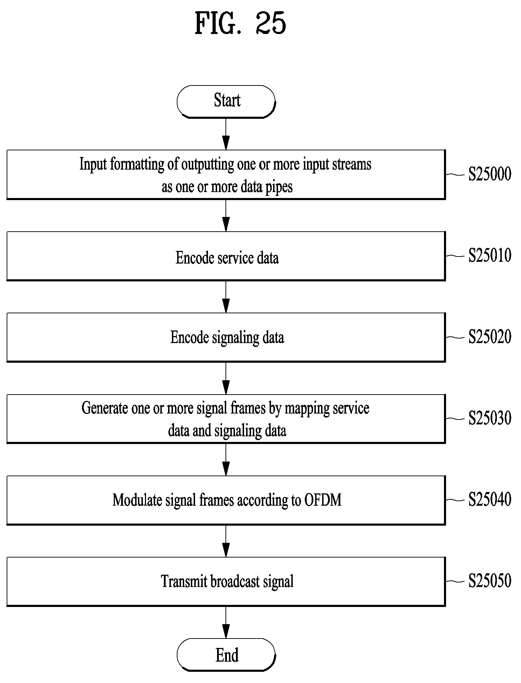

FIG. 25 is a flowchart illustrating a method for transmitting broadcast signals according to an embodiment of the present invention.

An apparatus for transmitting broadcast signals according to an embodiment of the present invention can output one or more input streams as one or more data pipes (S25000). The data pipes carry one or more services or service components. Services or service components transmitted through the data pipes can be referred to as service data. As described above, the input streams input to the apparatus for transmitting broadcast signals can include at least one of IP, TS and GS packets. The IP packet can include an IP packet header and an IP packet payload.

The apparatus for transmitting broadcast signals according to an embodiment of the present invention can compress IP packet headers when two or more fragmented IP packets are input thereto. The apparatus for transmitting broadcast signals according to an embodiment of the present invention can extract two or more fragmented IP packets and merge IP packet payloads included in the extracted fragmented IP packets to generate a merged IP packet. The merged IP packet can include a merged IP packet header. The size of a fragmented IP packet can be equal to or smaller than the MTU of IP packets transmitted over Ethernet, that is, 1500 bytes. Accordingly, the merged IP packet can be larger than each of the two or more fragmented IP packets. Furthermore, the size of the merged IP packet can be larger than the MTU (1500 bytes) of IP packets transmitted over Ethernet.

Then, the apparatus for transmitting broadcast signals according to an embodiment of the present invention can encode the service data (S25010).

Subsequently, the apparatus for transmitting broadcast signals according to an embodiment of the present invention can encode signaling data (S25020). The signaling data can include information indicating IP packet type, IP packet length, MTU of IP packets, whether header compression has been applied to IP packets, etc.

The apparatus for transmitting broadcast signals according to an embodiment of the present invention can map the service data and the signaling data to generate one or more signal frames (S25030).

The apparatus for transmitting broadcast signals according to an embodiment of the present invention can modulate the one or more signal frames according to OFDM (S25040).

The apparatus for transmitting broadcast signals according to an embodiment of the present invention can transmit one or more broadcast signals modulated according to OFDM (S25050).

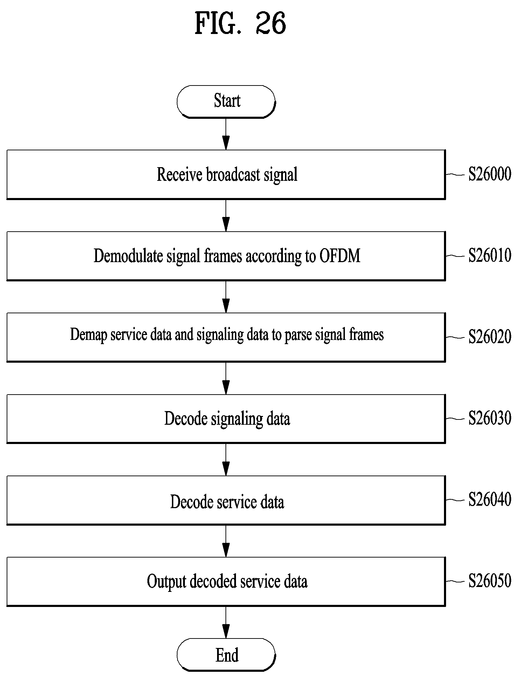

FIG. 26 is a flowchart illustrating a method for receiving broadcast signals according to an embodiment of the present invention.

FIG. 26 corresponds to a reverse procedure of the method for transmitting broadcast signals, illustrated in FIG. 25.

An apparatus for receiving broadcast signals according to an embodiment of the present invention can receive one or more broadcast signals (S26000).

The apparatus for receiving broadcast signals according to an embodiment of the present invention can demodulate the received broadcast signals according to OFDM (S26010).

Then, the apparatus for receiving broadcast signals according to an embodiment of the present invention can separate one or more signal frames from the broadcast signals demodulated according to OFDM (S26020).

Subsequently, the apparatus for receiving broadcast signals according to an embodiment of the present invention can decode signaling data included in the separated signal frames (S26030). The signaling data can include information indicating IP packet type, IP packet length, MTU of IP packets, whether header compression has been applied to IP packets, etc.

The apparatus for receiving broadcast signals according to an embodiment of the present invention can decode service data included in the separated signal frames (S26040).

Then, the apparatus for receiving broadcast signals according to an embodiment of the present invention can output the decoded service data (S26050). The apparatus for receiving broadcast signals according to an embodiment of the present invention can perform reverse procedures of various compression/signal processing procedures applied to increase transmission efficiency. When the decoded service data includes a merged IP packet to which IP packet header compression according to the aforementioned embodiment has been applied, the apparatus for receiving broadcast signals according to an embodiment of the present invention can generate a plurality of fragmented IP packet headers from the header of the merged IP header by performing header decompression. The apparatus for receiving broadcast signals according to an embodiment of the present invention can split the payload of the merged IP packet into a plurality of fragmented IP packet payloads on the basis of information included in the generated fragmented IP packet headers and signaling information. The apparatus for receiving broadcast signals according to an embodiment of the present invention can output a plurality of fragmented IP packets. The fragmented IP packets can respectively include the generated fragmented IP packet headers and fragmented IP packet payloads corresponding to the information included in the fragmented IP packet headers. The size of the generated fragmented IP packets can be less than the MTU, 1500 bytes, of IP packets, which can be transmitted over Ethernet.

While the embodiments have been described with reference to respective drawings for convenience, embodiments may be combined to implement a new embodiment. In addition, designing a computer-readable recording medium storing programs for implementing the aforementioned embodiments is included in the scope of the present invention.

The signal processing device and the control method according to the present invention is not limited to the configurations and methods of the above-described embodiments and all or some of the embodiments may be selectively combined to obtain various modifications.

The methods for transmitting/receiving broadcast signals according to the present invention may be implemented as processor-readable code in a processor-readable recording medium included in a network device. The processor-readable recording medium includes all kinds of recording media storing data readable by a processor. Examples of the processor-readable recording medium include a ROM, a RAM, a CD-ROM, a magnetic tape, a floppy disk, an optical data storage device and the like, and implementation as carrier waves such as transmission over the Internet. In addition, the processor-readable recording medium may be distributed to computer systems connected through a network, stored and executed as code readable in a distributed manner.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Such modifications should not be individually understood from the technical spirit or prospect of the present invention.

Both apparatus and method inventions are mentioned in this specification and descriptions of both of the apparatus and method inventions may be complementarily applicable to each other.

### [Mode for Invention]

Various embodiments have been described in the best mode for carrying out the invention.

### [Industrial Applicability]

The present invention is industrially applicable to industrial fields related to a method for transmitting broadcast signals, a method for receiving broadcast signals, an apparatus for transmitting broadcast signals and an apparatus for receiving broadcast signals.

## Claims

1. A method for transmitting broadcast signals, comprising:
processing one or more input streams and outputting the processed input streams as one or more data pipes, the data pipes carrying one or more services or service components, the input streams including at least one IP packet, the at least one IP packet including an IP packet header and an IP packet payload, IP packet header compression being performed when the at least one IP packet is a fragmented IP packet on the basis of information included in the IP packet header;
encoding service data of the data pipes;
encoding signaling data, the signaling data including information signaling the one or more pieces of service data transmitted through the data pipes;
mapping the encoded service data and the encoded signaling data to generate one or more signal frames;
modulating the generated one or more signal frames according to orthogonal frequency division multiplexing (OFDM); and
transmitting a broadcast signal including the modulated one or more signal frames.

2. The method according to claim 1, wherein the performing of IP packet compression comprises:
extracting two or more fragmented IP packets; and
generating a merged IP packet payload by merging IP packet payloads included in the extracted fragmented IP packets and generating a merged IP packet including the generated merged IP packet payload,
wherein the merged IP packet further includes a merged IP packet header generated on the basis of IP packet headers respectively included in the extracted fragmented IP packets.

3. The method according to claim 1, wherein each of the IP packet headers includes at least one of an Internet protocol (IP) header, a user datagram protocol (UDP) header, a real time protocol (RTP) header.

4. The method according to claim 2, wherein the size of the merged IP packet payload is greater than the size of the payload of each of the extracted fragmented IP packets, and the size of each of the extracted fragmented IP packets is equal to or less than a maximum transmission unit (MTU) of IP packets.

5. The method according to claim 1, wherein the signaling data includes information about the at least one IP packet included in the signaling data.

6. The method according to claim 1, wherein the signaling data includes information indicating whether the performing of IP packet header compression is included.

7. A method for receiving broadcast signals, comprising:
receiving one or more broadcast signals;
demodulating the received one or more broadcast signals according to OFDM;
decoding signaling data included in signal frames, the signaling data including information signaling service data included in the signal frames transmitted through data pipes;
obtaining one or more signal frames from the demodulated one or more broadcast signals, the data pipes carrying one or more services or service components;
decoding the service data of the data pipes; and
outputting the decoded service data,
wherein, when the service data includes a merged IP packet, the method comprises splitting the merged IP packet, the merged IP packet including a merged IP packet header and a merged IP packet payload, the merged IP packet payload including payloads of two or more IP packets.

8. The method according to claim 7, wherein the splitting of the merged IP packet comprises splitting the merged IP packet into two or more IP packets on the basis of information included in the merged IP packet header and information included in the signaling data,
wherein the two or more IP packets respectively include IP packet headers and IP packet payloads,
wherein the IP packet headers are generated on the basis of information included in the merged IP packet header and information on the payloads of the split IP packets.

9. The method according to claim 7, wherein the merged IP packet includes at least one of an IP header, a UDP header and an RTP header.

10. The method according to claim 8, wherein the size of each of the split two or more IP packets is equal to or less than an MTU of IP packets.

11. The method according to claim 7, wherein the signaling data includes information about one or more IP packets included in the service data.

12. The method according to claim 7, wherein the signaling data includes information indicating whether the service data includes the merged IP packet.

13. An apparatus for transmitting broadcast signals, comprising:
an input formatter for processing one or more input streams and outputting the processed input streams as one or more data pipes, the data pipes carrying one or more services or service components, the input streams including at least one IP packet, the at least one IP packet including an IP packet header and an IP packet payload, the input formatter performing IP packet header compression when the at least one IP packet is a fragmented IP packet on the basis of information included in the IP packet header;
an encoder for encoding service data of the data pipes;
an encoder for encoding signaling data, the signaling data including information signaling the one or more pieces of service data transmitted through the data pipes;
a frame builder for mapping the encoded service data and the encoded signaling data to generate one or more signal frames;
a modulator for modulating the generated one or more signal frames according to orthogonal frequency division multiplexing (OFDM); and
a transmitter for transmitting a broadcast signal including the modulated one or more signal frames.

14. The apparatus according to claim 13, wherein IP packet compression is performed by extracting two or more fragmented IP packets, generating a merged IP packet payload by merging IP packet payloads included in the extracted fragmented IP packets and generating a merged IP packet including the generated merged IP packet payload,
wherein the merged IP packet further includes a merged IP packet header generated on the basis of IP packet headers respectively included in the extracted fragmented IP packets.

15. The apparatus according to claim 13, wherein each of the IP packet headers includes at least one of an IP header, a UDP header, and an RTP header.

16. The apparatus according to claim 14, wherein the size of the merged IP packet payload is greater than the size of the payload of each of the extracted fragmented IP packets, and the size of each of the extracted fragmented IP packets is equal to or less than an MTU of IP packets.

17. The apparatus according to claim 13, wherein the signaling data includes information about the at least one IP packet included in the signaling data.

18. The apparatus according to claim 13, wherein the signaling data includes information indicating whether IP packet header compression is performed.

19. An apparatus for receiving broadcast signals, comprising:
a receiver for receiving one or more broadcast signals;
a demodulator for demodulating the received one or more broadcast signals according to OFDM;
a decoder for decoding signaling data included in signal frames, the signaling data including information signaling service data included in the signal frames transmitted through data pipes;
a frame parser for obtaining one or more signal frames from the demodulated one or more broadcast signals, the data pipes carrying one or more services or service components;
a decoder for decoding the service data of the data pipes; and
an output unit for outputting the decoded service data,
wherein, when the service data includes a merged IP packet, the merged IP packet is split into IP packets, the merged IP packet including a merged IP packet header and a merged IP packet payload, the merged IP packet payload including payloads of two or more IP packets.

20. The apparatus according to claim 19, wherein the merged IP packet is split into two or more IP packets on the basis of information included in the merged IP packet header and information included in the signaling data,
wherein the two or more IP packets respectively include IP packet headers and IP packet payloads,
wherein the IP packet headers are generated on the basis of information included in the merged IP packet header and information on the payloads of the split IP packets.

21. The apparatus according to claim 19, wherein the merged IP packet includes at least one of an IP header, a UDP header and an RTP header.

22. The apparatus according to claim 19, wherein the size of each of the split two or more IP packets is equal to or less than an MTU of IP packets.

23. The apparatus according to claim 19, wherein the signaling data includes information about one or more IP packets included in the service data.

24. The apparatus according to claim 19, wherein the signaling data includes information indicating whether the service data includes the merged IP packet.
